# EUROPEAN PATENT APPLICATION

(11) **EP 4 848 693 A1**
(43) Date of publication of application: **02.12.2026**
(21) Application number: 25305784.8
(22) Date of filing: 30.05.2025
(51) Int. Cl.: H04L 65/1069, H04L 65/1104, H04L 65/65, H04L 65/70, H04N 7/15

(54) **AVATAR ANIMATION TRANSMISSION METHODS FOR REAL-TIME SERVICES**

(71) Applicant: InterDigital CE Patent Holdings, SAS, 75017 Paris (FR)
(72) Inventor: HAMZA, Ahmed, COQUITLAM, V3J 3X5 (CA); COVA REGATEIRO, João Pedro, 35220 CHATEAUBOURG (FR); DE FOY, Xavier, KIRKLAND, H9H5K5 (CA); YANG, Hyunsik, LEONIA, 07605 (US)
(74) Representative: Vossius & Partner Patentanwälte Rechtsanwälte mbB

(57) **Abstract**

A system, device and method for a receiver to utilize an avatar identification (ID) are described. The method includes receiving a first message indicating one or more avatar animation streams, the first message including an indication of one or more avatar IDs, determining that the receiver has a plurality of avatar container files corresponding to at least one of the indicated one or more avatar IDs, determining at least one avatar ID corresponding to the determined avatar container files to receive avatar animation streams for, sending a second message indicating the determined at least one avatar IDs for the determined avatar animation streams, and receiving information including a plurality of avatar animation units (AAUs) corresponding to the determined at least one avatar IDs.

## Description

### BACKGROUND

Avatars are digital representations of users in the metaverse, which are a set of virtual worlds where people can interact with each other in real-time. Users can customize different aspects of their avatars, such as clothing, accessories, and even physical attributes. Avatars allow users to express themselves and create a unique digital identity within the metaverse. The integration, animation, and representation of avatars in real-time communication services is essential to enable immersive experiences.

### SUMMARY

The systems, methods and devices described herein are configured to transmit avatar animation data in real-time transport protocol (RTP) packets for real-time communication services.

The systems, methods and devices comprise an avatar animation packet. The avatar animation packet comprises a protocol data unit (PDU) that comprises one or more animation transport units (ATUs), wherein the one or more ATUs include a plurality of avatar animation transport information elements (IEs). The plurality of avatar animation transport IEs may comprise a synchronization (sync) type IE configured to indicate that the one or more ATUs includes avatar animation data that can be processed independently from other ATUs, such that when a decoder processes the one or more ATUs, the processing includes, based on the sync type IE, independent processing of the one or more ATUs or processing the one or more ATUs in conjunction with previously processed ATUs. The plurality of avatar animation transport IEs may comprise a unit type IE configured to indicate an ATU type for the one or more ATUs. The plurality of avatar animation transport IEs may comprise a transmission type IE configured to represent the transmission type of the avatar animation packet. The transmission type may include one of single packet mode, aggregation mode, and fragmentation mode. The plurality of avatar animation transport IEs may comprise an animation sequence number IE configured to provide a time duration for the one or more ATUs. The animation sequence number IE may indicate that the one or more ATUs are provided for an animation at a same time. The animation sequence number IE may indicate that the one or more ATUs are provided for an animation at a different time. The plurality of avatar animation transport IEs may comprise one or more avatar animation transport indications. The one or more avatar animation transport indications may include one or more of an end of animation silence indication, a last fragment indication, a last dependent media packet indication, a synchronization indication, and a configuration indication. The plurality of avatar animation transport IEs may comprise an avatar identification (ID) indicating the avatar model corresponding to the one or more ATUs. The plurality of avatar animation transport IEs may comprise a level of detail (LoD) indicating the resolution (e.g., mesh granularity) corresponding to the one or more ATUs.

The systems, methods and devices comprise per-flow avatar animation transport IEs associated with an avatar animation session. The per-flow avatar animation transport IEs may include an animation encoding method IE indicating one or more animation encoding methods that are supported. The per-flow avatar animation transport IEs may include an avatar part identification (ID) IE indicating which avatar part the animation is associated with.. The per-flow avatar animation transport IEs may include an animation silence suppression IE indicating whether animation silence is supported. The per-flow avatar animation transport IEs may include one or more of a version IE, profile IE, media type priority IE, animation congestion control configuration IE, and selective animation loss recovery configuration IE. The per-flow avatar animation transport IEs may include one or more avatar identification (ID) indicating the avatar models the animation is associated with. The per-flow avatar animation transport IEs may include one or more level of details (LoD) indicating the resolutions (e.g., mesh granularities) the animation is associated with.

A system, device and method for a receiver to utilize an avatar identification (ID) are described. The method includes receiving a first message indicating one or more avatar animation streams, the first message including an indication of one or more avatar IDs, determining that the receiver has a plurality of avatar container files corresponding to at least one of the indicated one or more avatar IDs, determining at least one avatar ID corresponding to the determined avatar container files to receive avatar animation streams for, sending a second message indicating the determined at least one avatar IDs for the determined avatar animation streams, and receiving information including a plurality of avatar animation units (AAUs) corresponding to the determined at least one avatar IDs.

The method may include at least one of the first message or the second message being a session description protocol (SDP) message. The method may further include providing the AAUs to a decoder based on the corresponding avatar ID. The method may include the received information comprising one or more real time protocol (RTP) packets. The method may further include providing animation associated with the received plurality of AAUs. The method may include the avatar IDs being avatar part IDs.

A system, device and method for a media sender to provide an avatar identification (ID)are described. The method includes determining to multiplex avatar IDs in an avatar animation stream, sending, to a media receiver, a first message indicating one or more avatar animation streams, including an indication of one or more avatar IDs, receiving, from the media receiver, a second message indicating a selection of the one or more avatar animation streams, including an indication of one or more selected avatar IDs, and sending, to the media receiver, information including a plurality of avatar animation units (AAUs) corresponding to at least one of the one or more selected avatar IDs.

The method may include the determination to multiplex being based on at least one of application configuration and participants or avatars involved. The method may include the determination being based on being in a group meeting. The method may include the information being real time protocol (RTP) packets.

The system may include a processor, and a transceiver communicatively coupled to the processor. The processor and transceiver configured to receive a first message indicating one or more avatar animation streams, the first message including an indication of one or more avatar identifications (IDs), determine that the receiver has a plurality of avatar container files corresponding to at least one of the indicated one or more avatar IDs, determine at least one avatar ID corresponding to the determined avatar container files to receive avatar animation streams for, send a second message indicating the determined at least one avatar IDs for the determined avatar animation streams, and receive information including a plurality of avatar animation units (AAUs) corresponding to the determined at least one avatar IDs.

The first message or second message may be a session description protocol (SDP) message. The received information may be one or more real time protocol (RTP) packets. The processor and transceiver may be further configured to provide animation associated with the received plurality of AAUs. The avatar IDs may be avatar part IDs.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates a block diagram of an embodiment of video encoder in which various aspects of the embodiments may be implemented;
FIG. 3 illustrates a block diagram of an embodiment of video encoder in which various aspects of the embodiments may be implemented;
FIG. 4 illustrates a block diagram of a system within which aspects of the present embodiments may be implemented;
FIG. 5 illustrates a reference architecture for an avatar;
FIG. 6 illustrates a representative avatar animation bitstream for a structured avatar animation samples;
FIG. 7 illustrates a method for selecting an animation-encoding-method IE;
FIG. 8 illustrates examples of transmission modes in real-time transport protocol (RTP);
FIG. 9 illustrates the fragmentation RTP packet structure;
FIG. 10 illustrates examples of the RTP payload header definition;
FIG. 11 illustrates an exemplary RTP header for avatar animation;
FIG. 12 illustrates an RTP payload header for avatar animation;
FIG. 13 illustrates a unit type field;
FIG. 14 illustrates an RTP payload structure for avatar animation;
FIG. 15 illustrates a single AAU structure;
FIG. 16 illustrates a fragmented AAU structure;
FIG. 17 illustrates the single-time aggregation packet (STAP) structure; and
FIG. 18 illustrates the multi-time aggregation packet structure.

### DETAILED DESCRIPTION

The systems, methods and devices described herein are configured to transmit avatar animation data in real-time transport protocol (RTP) packets for real-time communication services.

The systems, methods and devices comprise an avatar animation packet. The avatar animation packet comprises a protocol data unit (PDU) that comprises one or more animation transport units (ATUs), wherein the one or more ATUs include a plurality of avatar animation transport information elements (IEs). The plurality of avatar animation transport IEs may comprise a synchronization (sync) type IE configured to indicate that the one or more ATUs includes avatar animation data that can be processed independently from other ATUs, such that when a decoder processes the one or more ATUs, the processing includes, based on the sync type IE, independent processing of the one or more ATUs or processing the one or more ATUs in conjunction with previously processed ATUs. The plurality of avatar animation transport IEs may comprise a unit type IE configured to indicate an ATU type for the one or more ATUs. The plurality of avatar animation transport IEs may comprise a transmission type IE configured to represent the transmission type of the avatar animation packet. The transmission type may include one of single packet mode, aggregation mode, and fragmentation mode. The plurality of avatar animation transport IEs may comprise an animation sequence number IE configured to provide a time duration for the one or more ATUs. The animation sequence number IE may indicate that the one or more ATUs are provided for an animation at a same time. The animation sequence number IE may indicate that the one or more ATUs are provided for an animation at a different time. The plurality of avatar animation transport IEs may comprise one or more avatar animation transport indications. The one or more avatar animation transport indications may include one or more of an end of animation silence indication, a last fragment indication, a last dependent media packet indication, a synchronization indication, and a configuration indication.

The systems, methods and devices comprise per-flow avatar animation transport IEs associated with an avatar animation session. The per-flow avatar animation transport IEs may include an animation encoding method IE indicating one or more animation encoding methods that are supported. The per-flow avatar animation transport IEs may include an avatar part identification (ID) IE indicating which avatar part the animation is associated with.. The per-flow avatar animation transport IEs may include an animation silence suppression IE indicating whether animation silence is supported. The per-flow avatar animation transport IEs may include one or more of a version IE, profile IE, media type priority IE, animation congestion control configuration IE, and selective animation loss recovery configuration IE.

A system, device and method for a receiver to utilize an avatar identification (ID) are described. The method includes receiving a first message indicating one or more avatar animation streams, the first message including an indication of one or more avatar IDs, determining that the receiver has a plurality of avatar container files corresponding to at least one of the indicated one or more avatar IDs, determining at least one avatar ID corresponding to the determined avatar container files to receive avatar animation streams for, sending a second message indicating the determined at least one avatar IDs for the determined avatar animation streams, and receiving information including a plurality of avatar animation units (AAUs) corresponding to the determined at least one avatar IDs.

The method may include at least one of the first message or the second message being a session description protocol (SDP) message. The method may further include providing the AAUs to a decoder based on the corresponding avatar ID. The method may include the received information comprising one or more real time protocol (RTP) packets. The method may further include providing animation associated with the received plurality of AAUs. The method may include the avatar IDs being avatar part IDs.

A system, device and method for a media sender to provide an avatar identification (ID)are described. The method includes determining to multiplex avatar IDs in an avatar animation stream, sending, to a media receiver, a first message indicating one or more avatar animation streams, including an indication of one or more avatar IDs, receiving, from the media receiver, a second message indicating a selection of the one or more avatar animation streams, including an indication of one or more selected avatar IDs, and sending, to the media receiver, information including a plurality of avatar animation units (AAUs) corresponding to at least one of the one or more selected avatar IDs.

The method may include the determination to multiplex being based on at least one of application configuration and participants or avatars involved. The method may include the determination being based on being in a group meeting. The method may include the information being real time protocol (RTP) packets.

The system may include a processor, and a transceiver communicatively coupled to the processor. The processor and transceiver configured to receive a first message indicating one or more avatar animation streams, the first message including an indication of one or more avatar identifications (IDs), determine that the receiver has a plurality of avatar container files corresponding to at least one of the indicated one or more avatar IDs, determine at least one avatar ID corresponding to the determined avatar container files to receive avatar animation streams for, send a second message indicating the determined at least one avatar IDs for the determined avatar animation streams, and receive information including a plurality of avatar animation units (AAUs) corresponding to the determined at least one avatar IDs.

The first message or second message may be a session description protocol (SDP) message. The received information may be one or more real time protocol (RTP) packets. The processor and transceiver may be further configured to provide animation associated with the received plurality of AAUs. The avatar IDs may be avatar part IDs.

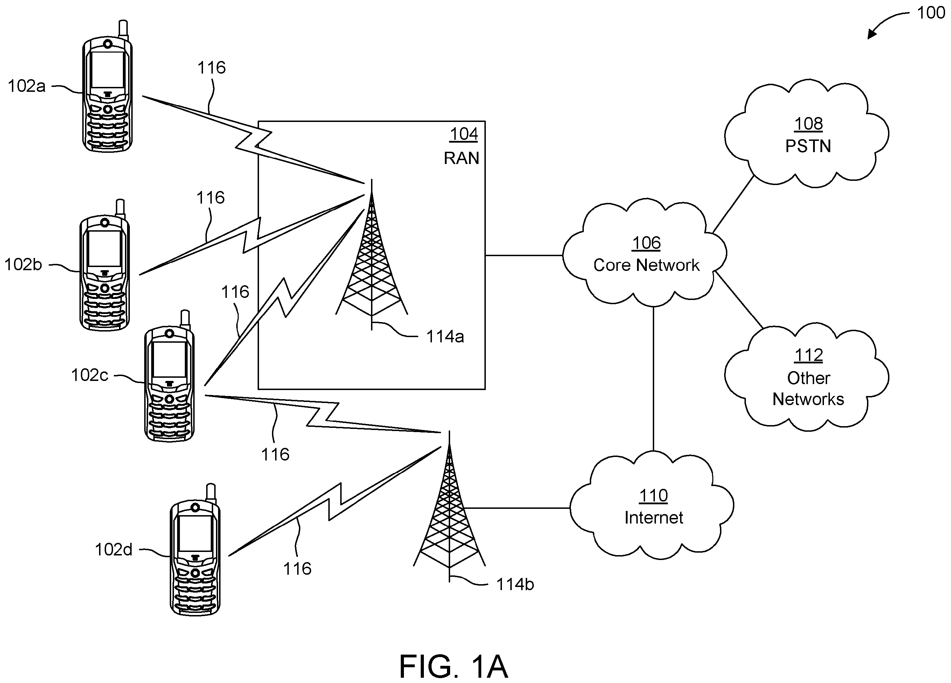

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

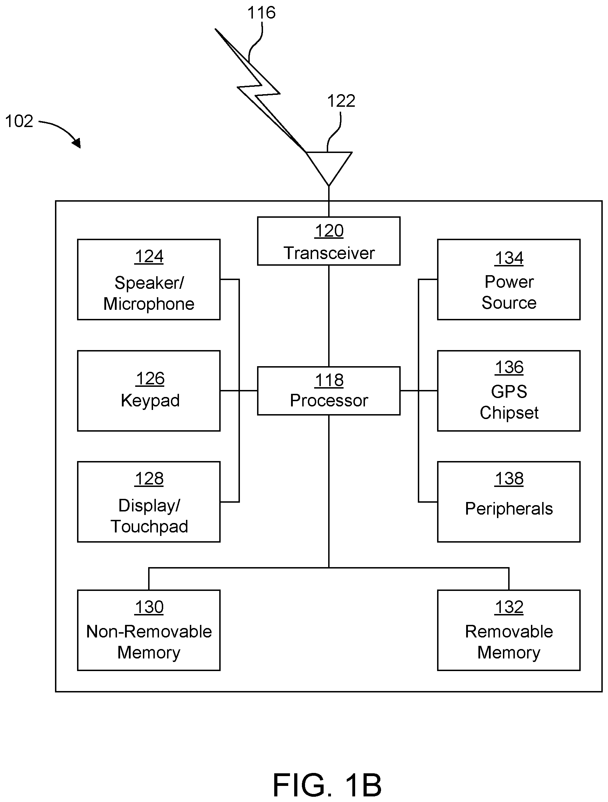

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

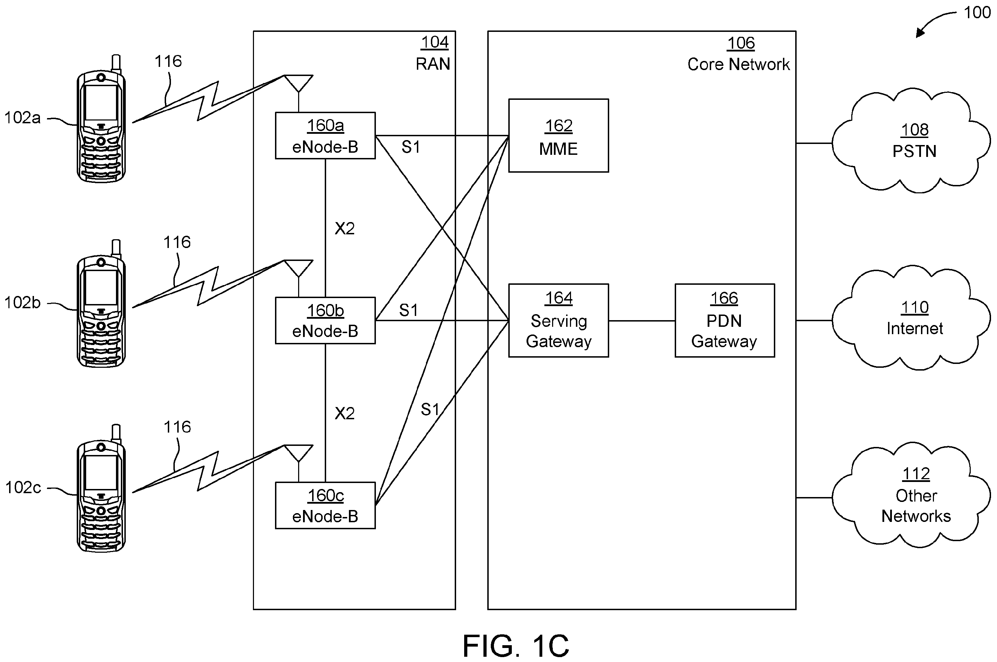

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem

(IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

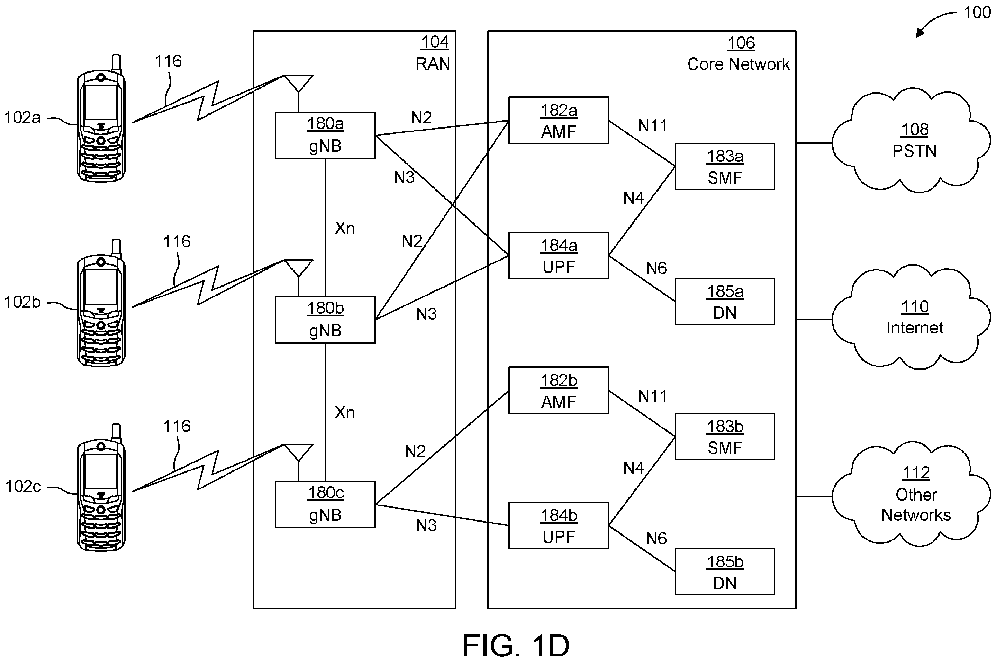

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated MultiPoint (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

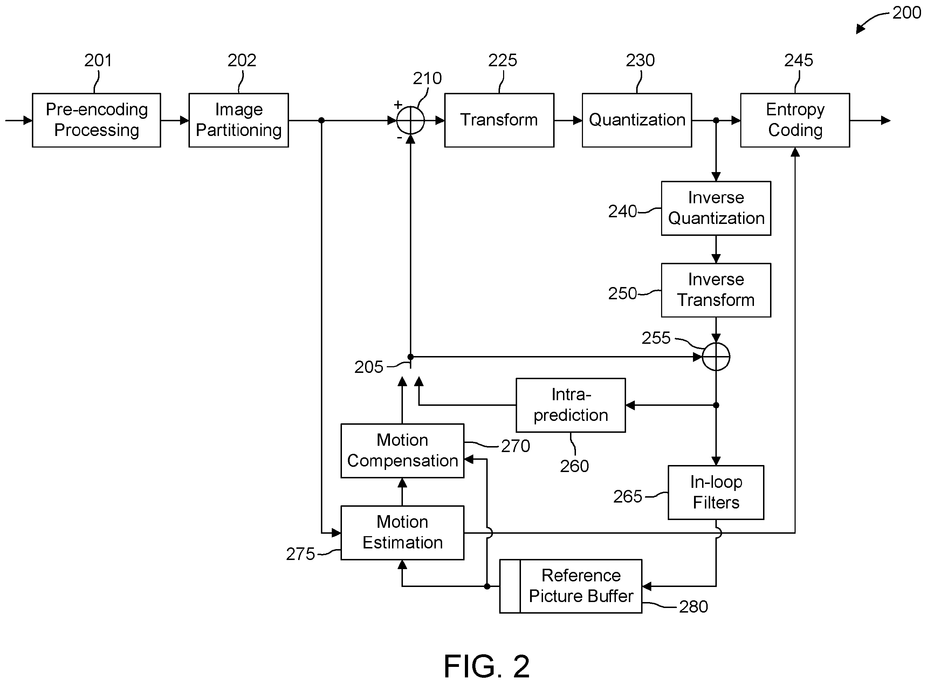

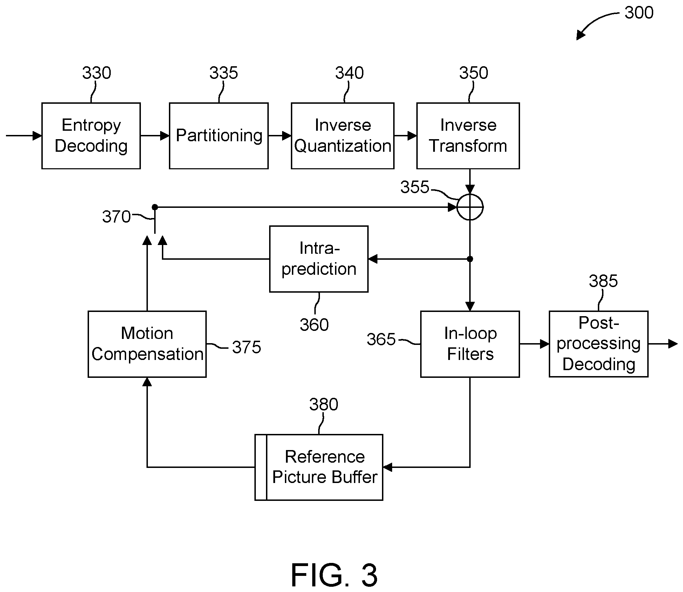

Various methods and other aspects described in this application can be used to modify modules, for example, the motion compensation (270, 375), motion estimation (275), entropy coding, intra (260, 360) and/or decoding modules (245, 330), of a video encoder 200 and decoder 300 as shown in FIG. 2 and FIG. 3. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 2 illustrates an encoder 200. Variations of this encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

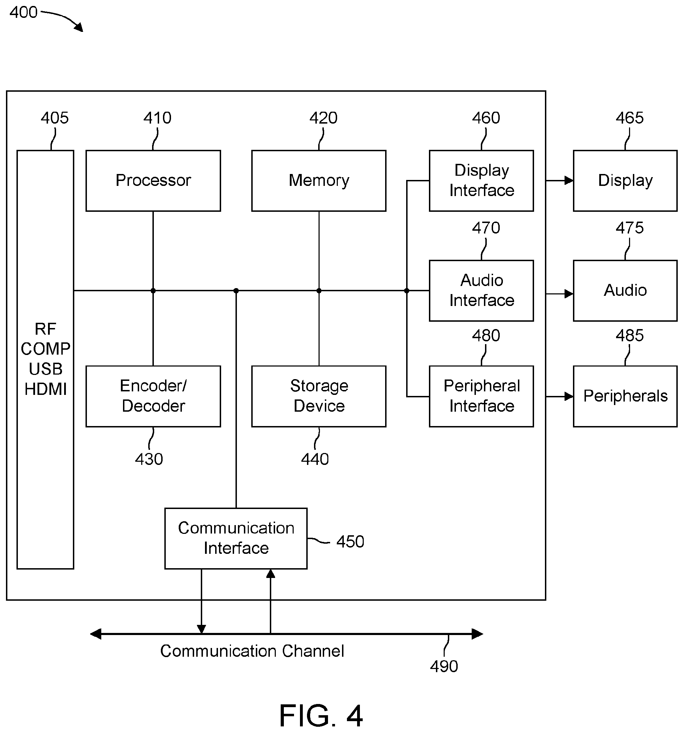

FIG. 4 illustrates a block diagram of an example of a system in which various aspects and embodiments can be implemented. System 400 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit, multiple ICs, and/or discrete components. For example, in at least one embodiment, the processing and encoder/decoder elements of system 400 are distributed across multiple ICs and/or discrete components. In various embodiments, the system 400 is communicatively coupled to other systems, or to other electronic devices, via, for example, a communications bus or through dedicated input and/or output ports. In various embodiments, the system 400 is configured to implement one or more of the aspects described in this application.

The system 400 includes at least one processor 410 configured to execute instructions loaded therein for implementing, for example, the various aspects described in this application. Processor 410 may include embedded memory, input output interface, and various other circuitries as known in the art. The system 400 includes at least one memory 420 (e.g., a volatile memory device, and/or a non-volatile memory device). System 400 includes a storage device 440, which may include non-volatile memory and/or volatile memory, including, but not limited to, EEPROM, ROM, PROM, RAM, DRAM, SRAM, flash, magnetic disk drive, and/or optical disk drive. The storage device 440 may include an internal storage device, an attached storage device, and/or a network accessible storage device, as non-limiting examples.

System 400 includes an encoder/decoder module 430 configured, for example, to process data to provide an encoded video/3D object or decoded video/3D object, and the encoder/decoder module 430 may include its own processor and memory. The encoder/decoder module 430 represents module(s) that may be included in a device to perform the encoding and/or decoding functions. As is known, a device may include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this application may be stored in storage device 440 and subsequently loaded onto memory 420 for execution by processor 410. In accordance with various embodiments, one or more of processor 410, memory 420, storage device 440, and encoder/decoder module 430 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or WC.

The input to the elements of system 400 may be provided through various input devices as indicated in block 405. Such input devices include, but are not limited to, (i) an RF portion that receives an RF signal transmitted, for example, over the air by a broadcaster, (ii) a composite input terminal, (iii) a USB input terminal, and/or (iv) an HDMI input terminal.

In various embodiments, the input devices of block 405 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 415, for example, an internal bus as known in the art, including the I2C bus, wiring, and printed circuit boards.

The system 400 includes communication interface 450 that enables communication with other devices via communication channel 490. The communication interface 450 may include, but is not limited to, a transceiver configured to transmit and to receive data over communication channel 490. The communication interface 450 may include, but is not limited to, a modem or network card and the communication channel 490 may be implemented, for example, within a wired and/or a wireless medium.

Data is streamed to the system 400, in various embodiments, using a Wi-Fi network such as IEEE 802.11 . The Wi-Fi signal of these embodiments is received over the communications channel 490 and the communications interface 450 which are adapted for Wi-Fi communications. The communications channel 490 of these embodiments is typically connected to an access point or router that provides access to outside networks including the Internet for allowing streaming applications and other over-the-top communications. Other embodiments provide streamed data to the system 400 using a set-top box that delivers the data over the HDMI connection of the input block 405. Still other embodiments provide streamed data to the system 400 using the RF connection of the input block 405.

The system 400 may provide an output signal to various output devices, including a display 465, speakers 475, and other peripheral devices 485. The other peripheral devices 485 include, in various examples of embodiments, one or more of a stand-alone DVR, a disk player, a stereo system, a lighting system, and other devices that provide a function based on the output of the system 400. In various embodiments, control signals are communicated between the system 400 and the display 465, speakers 475, or other peripheral devices 485 using signaling such as AV.Link, CEC, or other communications protocols that enable device- to-device control with or without user intervention. The output devices may be communicatively coupled to system 400 via dedicated connections through respective interfaces 460, 470, and 480. Alternatively, the output devices may be connected to system 400 using the communications channel 490 via the communications interface 450. The display 465 and speakers 475 may be integrated in a single unit with the other components of system 400 in an electronic device, for example, a television. In various embodiments, the display interface 460 includes a display driver, for example, a timing controller (T Con) chip.

The display 465 and speaker 475 may alternatively be separate from one or more of the other components, for example, if the RF portion of input 405 is part of a separate set-top box. In various embodiments in which the display 465 and speakers 475 are external components, the output signal may be provided via dedicated output connections, including, for example, HDMI ports, USB ports, or COMP outputs.

A number of standardization activities related to avatar representation and avatar-based communication are currently on-going in MPEG and 3GPP. In MPEG, a new specification for a standardized avatar representation format is being considered. The specification may define a JSON-based format for describing an avatar, the avatar components, and the avatar relevant assets. Moreover, the specification may define how encapsulate such a representation in media containers, such as ISO based media file format (ISOBMFF) containers and ZIP-based containers. In addition to the components and assets of the avatar, the containers may also store timed-animation data that can be used to playback pre-recorded animations.

In 3GPP, the Service and Systems Aspects (SA) working group (SA4) has an on-going activity on avatars in real-time communication services with the objective of identifying and addressing key technology challenges and recommending solutions for the support of Avatars in RTC services in 5G/6G network architectures. This includes documenting the QoS, processing, and storage requirements for Avatars to support a number of identified use cases.

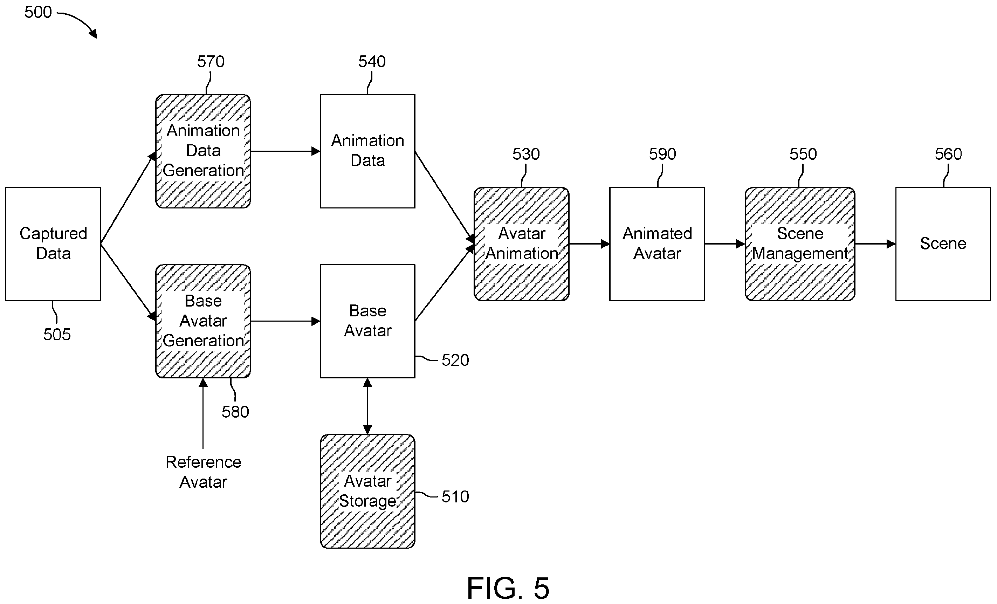

FIG. 5 illustrates a reference architecture 500 for an avatar. Architecture 500 include a depiction from a set of captured data 505 to rendering a scene 560. Captured data 505 provides information to animation data generation 570 and base avatar generation 580. Animation data generation 570 provides animation data 540. Base avatar generation 580 with input from avatar storage 510 provides base avatar 520. Animation data 540 and base avatar 520 may be combined to include avatar animation 530. Avatar animation 530 provides animated avatar 590. Animated avatar 590 provides scene management 550 which leads to scene 560.

Avatar storage 510 represents an entity that offers storage of base avatars 520. This entity may be offered by the 5G System, a 3rd party entity, or the local storage of the user's devices. Avatar storage 510 may ensure proper access to base avatar 520 and any related data, including authorization of avatar usage rights. The Authentication functionality may map and identify the ownership of an avatar.

Avatar animation 530, depending on the avatar representation format, represents an entity that retrieves base avatar 520, receives representation format-specific animation data 540 streams, and performs the avatar animation to produce animated avatar 590 that may be used in the rendering process.

Scene management 550 may create and compose the shared 3D scene 560 for all participants. Scene management 550 may integrate a description of the user's avatar and may update the avatar position and orientation based on the user's pose, and its properties.

Animation data generation 570 may generate animation data 540 from raw signals, such as captured data 505. The raw signals may come from cameras, microphones, and specialized motion capturing devices, etc.

Base avatar generation 580 may generates base avatar 520 from the inputs, including captured data 505, such as captured video from camera and other sensors information, possibly in conjunction with a reference avatar.

Avatar animation streams are timed data used to animate an avatar, such as via the processing architecture 500. This data includes skeletal, blend shape set, and other animation-related information. Animation stream format defines how animation data is structured and carried between senders and receivers. This format defines how facial and body animation information is encoded, allowing data captured from input devices like Head-Mounted Displays (HMDs) and sensors to be consistently interpreted across different systems for the animation of associated avatars.

Avatar animation data may be stored as samples in an avatar container, such as the Moving Picture Experts Group (MPEG) avatar representation format container, along with the avatar model representation. This data may also be generated on-the-fly as cameras and sensor capture a person's motion and generate corresponding commands to mimic this movement for an avatar that represent the user.

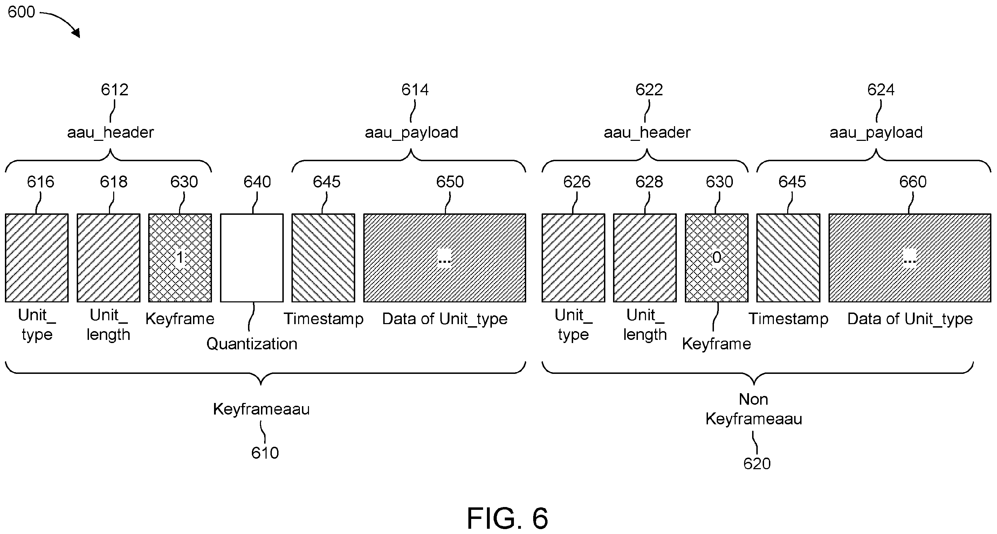

FIG. 6 illustrates a representative avatar animation bitstream 600 for a structured avatar animation samples. Avatar animation bitstream 600 includes a sequence of avatar animation units (AAUs). Avatar animation bitstream 600 may include a binary structure using a keyframe AAU 610 and a non-keyframe AAU 620. Keyframe AAU 610 includes a header 612 and a payload 614. Non-keyframe AAU 620 includes a header 622 and a payload 624. AAU header 612, 622 may contain a field that indicates a unit type 616, 626, unit length 618, 628, an identification of whether the bitstream is a keyframe 630 and a field that indicates the AAU payload 614, 624 that includes a timestamp 645 and data 650, 660 corresponding to the unit type 616, 626. The contents of the payload depend on the type of the AAU 610, 620.

Keyframe AAU 610 represents the main structure of the bitstream format including detailed information about the frame being transmitted (e.g., quantization 640 of data 650 in the payload of the unit as well as other payload properties). Non-keyframe AAU 620 includes the same types of properties of the payload as for the keyframe with the exception that data 660 being transmitted is reconstructed relative to the previous keyframe AAU. To this end, data 660 of non-keyframe AAU 620 is the difference between the current frame and the last keyframe AAU 610 prior to non-keyframe AAU 620, using quantization field 640 as a precision parameter to reconstruct the current frame.

The general syntax structure for an AAU as described above with respect to FIG. 6 is represented in Table 1.

**Table 1 - Syntax of avatar_animation_unit()**

| Syntax | No. of bits | Mnemonic |
|---|---|---|
| avatar_animation_unit() | | |
| { | | |
| aau_header(); | | |
| if (aau_keyframe) | | |
| aau_quantization | 16 | uimsbf |
| aau_payload(); | | |
| ByteAlignment | 0-7 | uimsbf |
| } | | |

The syntax structure of the AAU header 612, 622 as described above with respect to FIG. 6 is represented in Table 2.

**Table 2 - Syntax of aau_header().**

| | | |
|---|---|---|
| Syntax | No. of bits | Mnemonic |
| aau_header() | | |
| { | | |
| aau_unit_type; | 7 | uimsbf |
| aau_unit_length; | 32 | uimsbf |
| aau_keyframe; | 1 | boolean |
| if (aau_keyframe) | | |
| aau_quantization | 16 | uimsbf |
| reserved | 8 | uimsbf |
| } | | |

The aau_header() syntax construct contains the syntax elements including aau_unit_type 616, 626, aau_unit_length 618, 628, aau_keyframe 630, and aau_quantization 640. The aau_unit_type 616, 626 indicates the type of the AAU. Exemplary values associated with the unit type 616,626 are described in Table 3. The aau_unit_length 618, 628 indicates the size of AAU payload 614, 624 in bytes. The aau_keyframe 630 indicates whether AAU payload 614, 624 is a keyframe. The aau_quantization 640 indicates the type of AAU signaled by aau_unit_type is not a keyframe therefore it carries a quantization scale for the carried data.

**Table 3 - Avatar Animation Unit type codes and corresponding payloads.**

| aau_unit_type | Name of AAU type | Content of AAU payload |
|---|---|---|
| 0 | AAU_CONFIG | aau_config_unit() |
| 1 | AAU_ANIMATION | aau_animation_unit() |
| 2 | AAU_JOINT | aau_joint_unit() |
| 3 | AAU_LANDMARK | aau_landmark_unit() |
| 4..10 | AAU_RSV_4 | Reserved AAU types. |
| | AAU_RSV_10 | |
| 11..127 | AAU_UNSPEC_11 | Unspecified AAU types. |
| | AAU_UNSPEC_127 | |

The aau_payload() 614, 624 as described above respect to FIG. 6 is represented in Table 4.

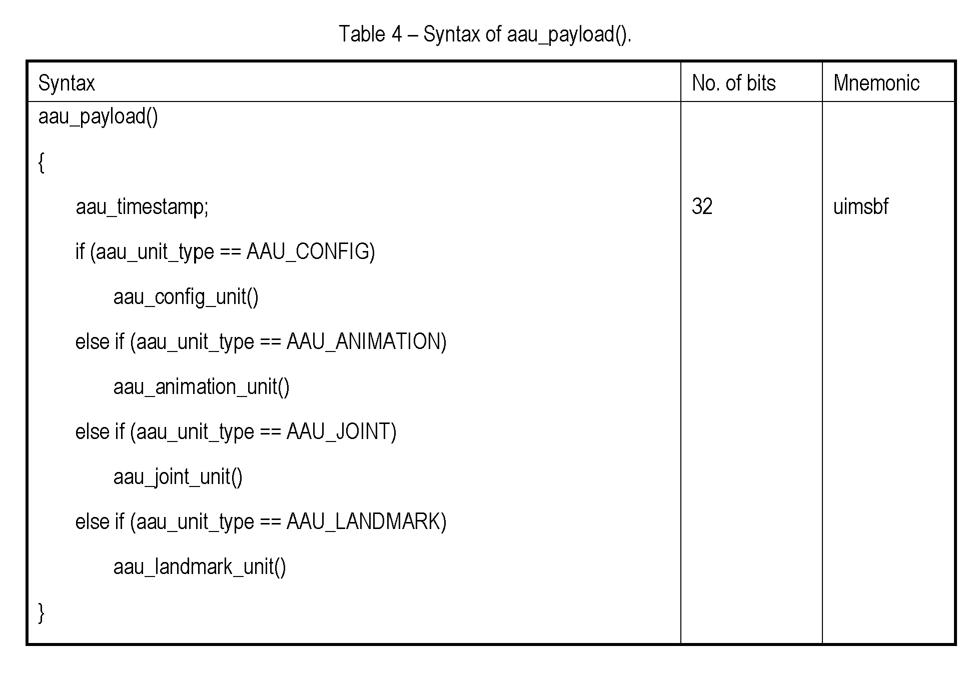

The aau_payload() 614, 624 syntax construct contains the syntax elements including aau_timestamp 645 and ByteAlignment. The aau_timestamp 645 is the timestamp of the AAU in ticks. The timestamp in seconds can be calculated as timestamp/timescale, where timescale is signaled in the configuration AAU. ByteAlignment provides padding with up to seven bits set to 0 for the AAU payload to be byte-aligned.

Real-time transport protocol (RTP) is a standard protocol for transmitting real-time voice, video, and data over an IP network. RTP uses Real-time Control Protocol (RTCP) to monitor data transfer status, provide minimum control functions, and for media identification. RTP is used in telecommunications and entertainment systems involving streaming media, such as telephony, WebRTC, television services, and video telephony including web-based push-to-talk capabilities. However, the value of utilization increases only when a separate payload is configured according to the video codec. To this end, several RTP payload standards adapted to the characteristics of specific codecs have been established to enable transmission of audio and video encoded with various codecs in RTP.

The animation of an avatar model requires applying a sequence of animation data to the model. In real-time communication scenarios, the animation data are generated from the information captured by sensors and/or cameras that capture the user's movements. The animation data sequence needs to be transmitted in real-time to the devices of other parties in the call to enable the receiving device to apply the animation data to the avatar of the sender and renders it.

In addition, real-world use cases may involve not only one to one data transmission, but also one to many or many to many scenarios. For example, in multi-user virtual meetings or conference environments, animation data may be received simultaneously from multiple users. To enable efficient transmission in such environments, appropriate packet formats and transmission procedures should be defined based on the characteristics of the transmission environment.

Animated data may be transmitted to the entire avatar; however, depending on the scenario, animated data may also be delivered to specific parts of the avatar. For example, in a virtual conferencing environment where only the upper body is animated, it may not be necessary to transmit animation data for the lower body. In other scenarios, only facial data might be required. In such cases, supporting destination specification and stream configuration for individual body parts can enable more efficient and targeted transmission of animated data.

Furthermore, selective level of detail (LoD) configuration is another relevant use case. As described above, when only a portion of the avatar is actively used, transmitting high-fidelity motion data for the inactive parts is unnecessary. In bandwidth-constrained environments, the ability to adjust the LoD for the body region is essential for optimizing resource usage and reducing transmission overhead.

The system, devices and methods provide for transmitting avatar animation data in RTP packets for real-time communication services. This may include avatar IDs usage by a receiver, avatar IDs usage by a sender, and avatar part IDs usage by a receiver, for example.

For avatar IDs usage by receiver, the media receiver may receive an SDP message indicating one or more avatar animation streams, including an indication of one or more avatar IDs. The media receiver may obtain or verify it has the avatar container files corresponding to the signaled avatar IDs and may determine which avatar IDs it wishes to receive streams for. The media receiver may send an SDP message indicating one or more avatar animation streams, including an indication of the determined avatar IDs. The media receiver may receive RTP packets including AAUs corresponding to the determined avatar IDs.

Multiplexing may occur. For multiplexing, the media receiver may receive RTP packets including AAUs and including an indication of an avatar ID. The media receiver may provide the AAUs to the decoder, based on the avatar ID. For example, the receiver may run multiple decoding and/or rendering components (e.g., one per avatar ID) and the media receiver may efficiently transmit a received AAU to the appropriate decoding/rendering component, based on the (e.g., per-packet transport IE) avatar ID (e.g., included in the RTP payload header within the RTP packet including the AAU).

For avatar IDs usage by sender, the media sender may determine to multiplex avatar IDs in an avatar animation stream (e.g., because of application configuration, or because there are many participants/avatars involved in a group meeting). The media sender may send, to a media receiver, a message indicating one or more avatar animation streams, including an indication of one or more avatar IDs. The media sender may receive, from a media receiver, an SDP message indicating one or more avatar animation streams, including an indication of one or more avatar IDs. The media sender may send, to the sender, RTP packets including AAUs corresponding to the received avatar IDs, and including an indication of an avatar ID among the received avatar IDs.

For avatar part IDs usage by receiver. the media receiver may receive an SDP message indicating one or more avatar animation streams, each including an indication of one or more avatar part IDs. The media receiver may determine one or more avatar part IDs it wishes to receive, e.g., based on the avatar parts that the receiver (e.g., that the decoder on the receiver) supports or that are currently loaded by the receiver. The media receiver may send an SDP message indicating one or more avatar animation streams, including an indication of the determined avatar part IDs. The media receiver may receive RTP packets including AAUs corresponding to the determined avatar part IDs.

An avatar animation sender (also referred to as "sender" herein) is a node that generates and transmits media flows to a receiving node which is called an avatar animation receiver (also referred to as "receiver"). An avatar animation flow (e.g., an RTP or MoQ flow) is composed of animation stream packets (e.g., RTP Packet, MoQ messages, or other media encapsulation format over an IP packet and/or UDP datagram). The animation stream packet can be transmitted from an avatar animation sender to receiver through intermediate nodes. An avatar animation receiver de-packetizes the animation data, applies it to a compatible avatar model, and renders the animated avatar.

An animation transport unit (AT Unit or ATU) is effectively a unit of information usable by the application. An ATU is also a unit of transport of information, which can be split during the transport (e.g., as fragments in different RTP packets) that is reassembled for use by the receiving application. For example, an ATU for avatar applications may be an AAU as described in [6]. The terms ATU, AT Unit, and AAU are used interchangeably herein.

An avatar animation packet is a PDU that carries one or more ATUs, or that carries a fragment of an ATU. For example, it can be an RTP packet carrying an ATU, multiple ATUs, or an ATU fragment. An avatar animation packet may be an instance of a generic metadata packet where the type of metadata in the payload of that packet is avatar animation data. The terms avatar animation packet, animation RTP packet, RTP packet are used interchangeably herein.

An intermediate node refers to a node on the path of the avatar animation media flow. An intermediate node can be a UPF, a UE, MUC, SFU, a MoQ or RoQ proxy, or an RTP middle box. The intermediate node can also be in some cases an application endpoint (e.g., WTRU).

AT units (e.g., AAUs), or avatar animation samples, can be units of payload for RTP packets. A new RTP payload header for avatar animation data is provided to describe the content of the RTP payload and to enable nodes (e.g., intermediate node, sender, or receiver) to apply any needed network service (e.g., identifying/selecting/marking packets, congestion control and loss recovery) while sending or forwarding RTP PDUs. An RTP payload header enables a node to provide a network service without requiring the node to parse the payload, which may not be possible (e.g., decoder not available on the node or payload not accessible/encrypted or payload partially inaccessible/fragmented) or may be costly in term of processing resources on the node. Since AT Units can be larger than the maximum that fit in an RTP PDU (e.g., if the AT Unit is carrying animation information for many joints in a complex avatar model), in some cases an AT Unit can be fragmented across multiple RTP PDUs. An additional fragmentation header can be used to enable defragmenting the AT units by the receiver. Small AT units may also be aggregated inside a single RTP PDU. An additional aggregation header can be used to enable retrieving individual AT units from an RTP PDU.

Avatar animation transport information elements (IEs) can be used to indicate some characteristics of the avatar animation data included in avatar animation packets. Avatar animation transport IEs can be associated with an avatar animation packet or with an avatar animation flow. Avatar animation transport IEs may be used to improve the QoS of avatar services.

Per-packet avatar animation transport IE can be associated with an avatar animation packet, e.g., per-packet avatar animation transport IEs may be encoded in RTP header, RTP payload header, RTP fragment or aggregation header, MoQ or RoQ headers.

In some cases, a per-packet avatar animation transport IE may also be a per-flow avatar animation transport IE. For example, an avatar animation stream including AAUs for a single avatar can be associated with an avatar ID. In another example, an avatar animation stream including AAUs for a single LOD can be associated with the single LOD value.

The plurality of per-packet avatar animation transport IEs may comprise a sync type IE. The sync type IE (i.e., D in FIGs.) may be used to indicate whether an ATU included in the avatar animation packet payload (e.g., RTP payload) is a sync ATU. A sync ATU contains avatar animation data that can be processed (e.g., decoded) independently from other ATUs, while a non-sync (or "dependent", e.g., corresponding to a value of 1 for the D bit in FIGs.) ATU requires other ATUs to have been already processed before the ATU itself can be processed or decoded. Hence, loss of a sync ATU has a more significant effect on the end-user's QoE more than the loss of a dependent ATU, since when losing an independent ATU, all dependent ATUs become unusable. The sync type IE can be used to prioritize avatar animation packets. In the case of transmission of aggregated ATUs in an avatar animation packet, a single aggregated sync type IE may be present in the avatar animation packet, with a "sync" value (or, equivalently, an "independent" value) if one or more sync ATUs are in the avatar animation packet. Alternatively, or additionally, each ATU in the avatar animation packet may be associated with one per-ATU sync type IE. Using a (aggregated or per-ATU) sync type IE, it is possible to improve the QoS of an avatar animation data stream by prioritizing some avatar animation packets (e.g., with sync type IE value "sync") over other avatar animation packets (e.g., with sync type IE value "non-sync"). The value of sync type can be represented by a single bit value 0 and 1. For example, in the case of a sync packet, the sync value is marked as 0 (independent) if it is not 1 (dependent).

The plurality of per-packet avatar animation transport IEs may comprise a unit type IE. The unit type IE (i.e., UT in FIGs.) indicates an ATU type. Based on this, a user may define processing methods based on packet importance. Through the unit type IE, it is possible to check what type of avatar animation packet is included and based on unit type IE, the importance of the avatar animation packet is analyzed to enable effective avatar animation packet transmission.

Several methods for marking packets to encode the unit type IE can be used as described below.

The unit type IE must apply to ATUs, and encodings can be provided in a variety of ways. The IE may be encoded in an avatar animation packet, which can contain more than one ATU. In the case of fragmentation, an avatar animation packet can contain part of an ATU (fragmented).

In a first example, which is an encoding example, when a single packet or a fragmented packet is included in an RTP packet. When more than one packet is included, it can be expressed for each bit as in the second example or implicitly according to importance as in the third example.

In the first example, if there is a single ATU (or a fragment of an ATU) in an avatar animation packet, the unit type IE value may be the value of the ATU unit type.

In the second example, unit type IE may use 1 bit for each type, therefore the summary shows that at least one ATU of each type is present if the corresponding bit has a "1" value.

In a third example, if there are more than one ATU in an avatar animation packet, unit type IE value may be the value of the unit type of the most important ATU type in the packet. In an example, the importance of the ATU type may be determined by a pre-determined ATU type-to-importance mapping (e.g., Configuration ATU more important than keyframe ATU more important than a non-keyframe ATU, more important than a Silent ATU). In other examples, the importance of the ATU type may be determined by a pre-determined mapping between the tuple (ATU type, ATU syn) and an importance.

The plurality of per-packet avatar animation transport IEs may comprise a transmission type IE. Transmission type IE is used to represent the transmission type of avatar animation packets. The transmission type modes are supported for avatar animation packets including single packet mode, aggregation mode and fragmentation mode. Single packet mode is configured in the case of a single AAU Packet, since one kind of packet is included, all contents of AAU are marked in the IE. Aggregation mode is configured in case of Aggregation mode, various types of AAUs can be included, and it is possible to indicate the most important packet type in the header or to mention all packets using additional bits. Fragmentation mode is configured in the case of fragmentation mode, one or two types of AAUs can be included, and it is possible to indicate the most important packet type in the header or to mention all packets using additional bits. Each transmission mode can be encoded with a specific bit or expressed in combination with a unit type IE.

The plurality of per-packet avatar animation transport IEs may comprise an Animation Sequence Number (ASN) IE. Each ATU may include animation data covering a time duration (which can also be referred to as time slots or time frames). These slots can have a fixed duration (e.g., between an initialization and the next or the end of the stream) which can be provided by a configuration unit. For each of these consecutive and nonoverlapping constant time slots, zero, one or more ATUs may be sent/received. The ASN IE indicates the sequence number of the time slot corresponding to an ATU, e.g., a positive integer. In an exemplary configuration, the ASN IE can be zero for a configuration unit, and can be increased by one, for each consecutive time frame following the initialization unit. ASN IE is reset as a '0' when a new initialization unit starts. The same ASN IE may be assigned to multiple ATUs covering the same time slot. Using the ASN IE, the receiver can determine if there is a discontinuity in a stream of ATUs, e.g., which can be caused by a media packet loss.

The plurality of per-packet avatar animation transport IEs may comprise an avatar ID IE (AvID)). The Avatar ID IE may indicate the avatar to which the ATU(s) in the payload of the animation packet are applicable. In an example, the Avatar IE refers to an avatar identifier that is within the scope of the session. In an example, the identifier signaled by the avatar ID IE refers to a unique identifier that globally identifies an avatar model. Using the Avatar ID IE, the receiver may associate the avatar animation data in the packet with the corresponding avatar model and send the animation data to the appropriate decoder and/or renderer for that avatar. In an animation multiplexing scenario, a receiver may utilize the Avatar ID IE to demultiplex the packets and forward the animation data to the corresponding decoder and/or renderer.

The plurality of per-packet avatar animation transport IEs may comprise an level-of-detail IE (LoD) IE. The level-of-detail IE may indicate the level-of-detail to which the ATU(s) in the payload of the animation packet are applicable. In an example, the Avatar IE refers to an identifier for a certain resolution (e.g., mesh granularity) of the avatar. Using the level-of-detail IE, the receiver may identify the packets containing animation data for the level-of-detail currently used by the application for the corresponding avatar.

The LoD of an AAU may be signaled in the RTP payload header in an RTP packet that includes this AAU. The media sender may set the LoD value in the RTP payload header, based on (e.g., to the same value as) the LoD value in the AAU. The media receiver may use the LOD value in the RTP payload header, or any explicit field in the payload outside of the header for this purpose, to facilitate the decoding of the AAU. For example, the media receiver may transmit the AAU to a decoder instance that is initialized to decode AAUs for a specific LOD. In an example, the encoder may decide to use different LoD during the lifetime of a stream, e.g., to adapt depending on the location of an avatar, e.g., to use coarser/lower LOD when the person is far from the camera or behind other persons or the environment, and to use a more detailed/higher LoD when the person is closer or more important to the experience of the user. In some embodiments, the Avatar ID and/or the Avatar Part ID may be used to identify and target a specific portion or component within the avatar, and different LoDs may be used for different avatar IDs and/or avatar part IDs.

The plurality of per-packet avatar animation transport IEs may comprise a layer IE. The AAU layer may be used to indicate the priority order of AAUs as determined by the media sender, e.g., based on application-specific needs. The layer may be, for example, an integer, where the lower value indicates a higher the priority of the packet processing (e.g., by intermediate nodes and/or by receivers). For example, the layer value may be used to determine the importance of an AAU when network congestion occurs. In an example, when packets including AAUs are transmitted along with packets including other types of media packets, such as audio/video also associated with a layer, the AAU layer may be used along with the audio/video layer to determine processing priority between avatar animation/audio/video packets. The AAU layer values may be non-negative integers, with, e.g., 0 as the highest priority.

The plurality of per-packet avatar animation transport IEs may comprise avatar animation indications. Avatar animation transport indications can be signaled in an avatar animation packet header. For example, such indications can be signaled in the RTP header (e.g., using the Marker bit, or M-bit in the standard RTP header), or in a RTP payload header for avatar animation (e.g., using a bit dedicated for a specific indication). When information is represented using the RTP header, it is possible to process a packet without checking the payload of the packet, which is therefore more efficient.

Avatar animation transport indications may include a number of indications described below.

An "end of animation silence" indication (e.g., the RTP header M-bit) may be used to mark the first avatar animation packet (e.g., RTP packet) after a period of avatar animation silence (i.e., idle period). Based on the end of animation silence indication (e.g., RTP header marker bit indication), the receiver can perform any necessary re-initialization operation and/or adapt the size/duration of the playout buffer (e.g., to improve playout synchronization with other media, and/or to adapt to degraded network transmission performances).

A "last fragment" indication may indicate that the current packet is the last media packet of a fragmented ATU. When an intermediate node or receiver node receives the last fragment of a fragmented avatar animation packet, the node can process data without waiting for further fragmented packets.

A "sync" indication may indicate that the media packet carries an ATU which is a sync (e.g., independent) ATU. A node may determine the priority of an avatar animation packet based on this indication, e.g., without requiring the parsing of the RTP payload header for avatar animation. The media packet priority may be used as described herein for network congestion or loss recovery.

A "configuration" indication may indicate that the type of ATU is a configuration ATU. A node may determine the priority of an avatar animation packet based on this indication without checking the RTP Payload Header. The media packet priority may be used for network congestion or loss recovery. The plurality of per-packet avatar animation transport IEs may comprise an avatar part identifier (ID). A per-packet avatar part ID may be used to indicate, e.g., to the receiver, which part of the avatar is animated in the AAU, which enables the receiver to transmit the AAU to the proper decoding/rendering component, e.g., in a case where different decoding/rendering components are used to decode and/or render different avatar part IDs.

Per-flow avatar animation transport IE can be associated with an avatar animation flow or session, e.g., per-flow avatar animation transport IEs may be encoded in SDP messages or application messages. Per-flow avatar animation transport IEs can also be referred to herein as "characteristics" of an avatar animation stream or flow. Using input from sensors, cameras, and/or from an encoder, the sender prepares a set of different streams corresponding to different capabilities of the possible receivers. For example, if the receiver only supports a certain set of animation types, the sender may prepare avatar animation streams that include animation data of this set of animation types. The sender then associates per-flow avatar animation transport IEs (e.g., among the ones listed below) to each media stream. The sender provides a list of media streams descriptions including per-flow avatar animation transport IEs to a receiver. The receiver, based on the characteristics of the supported avatar animation tools and capabilities for animating avatars, and based on the per-flow avatar animation transport IEs provided by the sender, selects the media streams it wishes to receive. The receiver may, in addition to or instead of selecting media stream(s), select a new value for a per-flow avatar animation transport IE and associate with a media stream description, which it can send to the sender. This behavior by the receiver can enable identifying a supported stream that can be used by the receiver for avatar animation, can help limiting bandwidth usage, and can help limit the impact of packet losses and congestion on the QoE for the end user. The receiver provides the selected media stream(s) to the sender (e.g., in an SDP answer). The sender streams the selected media stream(s) to the receiver. The receiver receives, decodes, and applies the avatar animation data to a loaded compatible avatar model and finally renders the animated avatar model to the user. In some cases, the order of messages may be different, e.g., the receiver may send avatar animation media description with per-flow transport IEs to the sender. The sender may select media flows to send based at least in part on per-flow transport IEs.

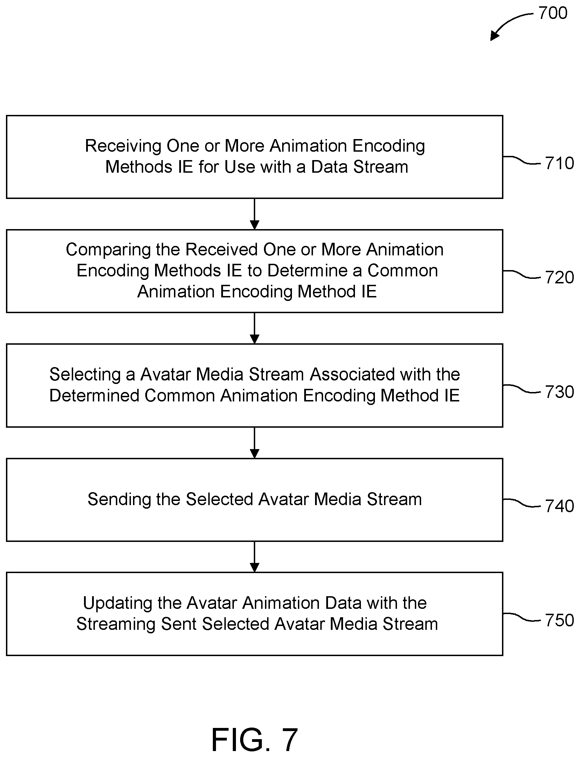

FIG. 7 illustrates a method 700 for selecting an animation-encoding-method IE. Method 700 includes, at 710, receiving one or more animation encoding methods IE for use in a data stream that are compatible with a sender. Method 700 includes, at 720, comparing, by a receiver, the sent one or more animation encoding methods IE to determine a common animation encoding method IE compatible with the receiver. Method 700 includes, at 730, selecting, by the receiver, an avatar media stream associated with the determined common animation encoding method IE. Method 700 includes, at 740, sending, by the receiver, the selected avatar media stream. Method 700 includes, at 750, updating the avatar animation data with the streaming sent selected avatar media stream. Method 700 where the with the streaming sent selected avatar media stream includes before streaming and/or during streaming.

The per-flow avatar animation transport IEs may include an animation-encoding method IE. An animation-encoding-method IE indicates one or more animation encoding methods (e.g., different representation or compression techniques for the animation data). A sender can set this IE to indicate avatar-encoding-method that may be used in the data stream. A receiver can set this IE to indicate the animation-encoding-method that it supports.

In an example, a sender sends a "animation-encoding-method IE" indicating the animation encoding methods that it supports for transmission in association with a media flow description. The sender may send multiple media flow descriptions with different supported animation-encoding-method IE, e.g., to support different sets of receivers that support different sets of animation representations and/or encodings.

The receiver may compare the supported animation-encoding-method IEs from the sender to the avatar encoding methods that it supports. The receiver may select an avatar animation media stream that is associated with the supported animation-encoding-method that are compatible (i.e., supported and usable) by the receiver's devices. The receiver responds to the sender with the selected media stream(s), e.g., by including them in an SDP answer message.

In some cases, the receiver, before sending back a response to the sender, may determine an animation-encoding-method IE associated with a selected media stream. For example, the receiver may prioritize different animation-encoding-method or may configure an animation-encoding-method selected by the application. The receiver sets an "animation-encoding-method" IE with this value(s) and associates this IE with the answer it sends to the sender. When the sender receives a selected avatar animation media stream without animation-encoding-method IE, indicating the receiver accepts the method(s) signaled by the sender, the sender starts streaming the selected media streams. When the sender receives a selected avatar animation media stream with a specific animation-encoding-method IE, the sender may update the avatar animation data before (or while) streaming. For example, when an animation-encoding-method changes, it can be updated. Alternatively, it can prioritize each animation-encoding-method by organizing them into different flows. By selecting an appropriate encoding method for the transmission, an optimized data stream method can be provided. Alternatively, it may reduce encoding costs when common encoding method used for various devices.

The per-flow avatar animation transport IEs may include one of more avatar part ID IEs (e.g., an IE including one or more values corresponding to one or more avatar part IDs). An avatar part ID IE indicates which avatar part the animation flow is associated with. A sender can set this IE to indicate the avatar parts that have corresponding data present in a data stream. A receiver can set this IE to indicate the body parts that it supports or is interested in receiving animation data for. In an example, the avatar part ID may be a string or, in some systems, a non-negative integer corresponding to standardized avatar part IDs.

An avatar animation stream may include AAUs including data for one, several or all avatar part IDs. A media sender or receiver may signal the avatar part IDs included in a stream in an SDP message, using an SDP parameter, e.g., named ampg-avatar-part-id, which may include one or more (e.g., comma-separated) avatar part IDs. A media sender may indicate the avatar part IDs included in a stream, in ampg-avatar-id. A media receiver may indicate the avatar part IDs it supports or wishes to receive, in ampg-avatar-id. In an example, a sender sends an avatar part ID associated with a media flow description. The sender may send multiple media flow descriptions with different supported avatar part ID IE, e.g., to support different sets of receivers that may require animation streams for only the avatar parts that they support or that are currently loaded by the receiver.

Other IEs may be used to enable similar adaptation (e.g., selection or marking) of avatar animation data by the media sender, based on a negotiation between media sender and receiver. Such other IEs include a timescale IE, indicating a number of ticks per second; an avatar level-of-detail IE, which indicates which levels of detail to use for the avatar(s).

The per-flow avatar animation transport IEs may include an animation silence suppression IE. An animation silence suppression IE indicates whether animation silence suppression is supported by a media sender and/or receiver. A sender can set the "animation silence suppression" IE (e.g., to a boolean value "true" or an integer value N) to indicate that it has the capability to not send any animation packets, including any defined silence packets, during an idle period to limit network resource usage. A receiver can set the "animation silence suppression" IE to indicate that it supports interpreting a time period without ATUs as an idle period, and that it may take any corresponding action to enable continuous operation of the decoder (e.g., with implicit silent packets during this period).

In an exemplary implementation of animation silence suppression, at some point the sender can send silent ATUs that indicate there is no animation to process during a time period. The sender can send the first N Silent ATUs (e.g., which may, in some systems, be the value of the avatar animation silence suppression IE). For example, N may be set to 2 or 3 to increase the probability that the receiver will receive at least one, even over a lossy network. The sender can then stop sending any Silent ATUs until a non-silent ATU is available to send. The receiver receives the initial Silent ATUs, and therefore can interpret the following missing ATUs as Silent, with high certainty.

The sender may set an indication in the first non-silent avatar animation packet after a period of silence, e.g., by setting the RTP header marker bit, as described herein.

The per-flow avatar animation transport IEs may include a version IE. A version IE indicates the version of the avatar specification defining the avatar animation bitstream used for transporting the avatar animation data flow. A profile IE indicates a set of avatar animation tools used to generate and consume the avatar animation data stream. For example, a profile IE value may indicate a reduced set of tools, therefore enabling simpler implementations adapted to the capability of the receiver devices.

The per-flow avatar animation transport IEs may include a "media-type priority" IE, an "animation congestion control configuration IE", and/or a "selective animation loss recovery configuration" IE. A "media-type-priority" IE indicates the relative priority between related audio, video, and animation flows. For example, if avatar animation is more important than audio, it would give more priority to the avatar animation flow over the audio media flow. An "animation congestion control configuration" IE indicates whether a congestion control algorithm for animation data can be used in case of a congestion event. A "selective animation loss recovery configuration" IE indicates whether an animation loss recovery algorithm can be used to determine which packet should be retransmitted.

The per-flow avatar animation transport IEs may include one of more avatar ID IEs (e.g., an IE including one or more values corresponding to one or more avatar IDs). An avatar ID IE may indicate the identifier of the avatar to which the animation data stream is associated. In some cases, e.g., when using avatar animation multiplexing (defined hereinafter), multiple avatar IDs may be associated with a single avatar animation stream.

An avatar animation stream may be dependent on an avatar container file. A receiver may decode a stream of AAUs. Generally, the receiver is unable to render the actual avatar animations without the assets corresponding to the avatar to animate. The assets are stored in an avatar container file (e.g., an avatar representation format (ARF) file), which is identified, within the context of the streaming application, using an Avatar ID. The avatar ID may, for example, be an integer or a string, which is unique within the scope of the application.

A receiver may be aware of the avatar container file that corresponds to an avatar animation stream. The receiver may use an avatar ID, associated with the avatar animation stream and with an avatar container file, to associate the stream with the container file, which enables rendering the animation. The receiver may receive the avatar container file from an application server, or the user may download the avatar container file from a server or an avatar model repository (e.g., a base avatar repository). The avatar container file may include the avatar ID, or the application may provide to the receiver, an IE that indicates which avatar container file corresponds to the avatar ID. The receiver may receive an avatar ID associated with a stream from an AS or sender, in an SDP message or in an application specific message. An example of an application specific message may include an avatar ID and the name of a stream, where the stream name is signaled in SDP messages.

To associate an avatar ID with a stream, a media sender or receiver may send, in an SDP message, an SDP parameter, e.g., named ampg-avatar-id, which contains an indication of the avatar ID (e.g., the avatar ID value, or an application-specific identifier referring to the avatar ID value). The media sender can obtain the avatar ID from the application, e.g., based on the application profile of the user which the avatar animation stream originates from. A media sender or receiver can include ampg-avatar-id in an SDP signaling, to indicate that it can send (resp. receive) an avatar animation stream corresponding to the avatar ID (and to its associated avatar container file). Based on the ampg-avatar-id parameter, the media receiver may determine which avatar container file to use for rendering the decoded animation.

The per-flow avatar animation transport IEs may include one of more level-of-detail IEs (e.g., an IE including one or more values corresponding to one or more level of details). A level-of-detail IE indicates the level of detail of the avatar model to which the animation data stream is applicable. The LoD may represent the amount of information which is provided to describe an avatar animation. An LoD IE may be a non-negative integer, where 0 represents the less detailed information (e.g., a coarse representation of the movement), and where higher numbers represents more and more detailed levels of information (e.g., more and more intermediate points for a smoother animation).

To associate an LOD with a stream, a media sender or receiver may send, in an SDP message, an SDP parameter, e.g., named ampg-lod, which contains an indication of one or more LODs (e.g., an LOD value or several LOD values, e.g., separated by a comma). Using the ampg-lod parameter, a media sender may indicate one or more LODs that it supports sending in a stream. Using the ampg-lod parameter, a media receiver can indicate one or more LODs that it supports, and/or prefers, receiving in a stream. For example, the order of the LOD values in the ampg-lod parameter may indicate an order or preference (e.g., the first LOD value may be the most preferred, and the following values may be less and less preferred).

Per-packet metadata can be encoded as bit fields in the RTP Payload Header and/or in RTP payload fragmentation headers and/or in RTP payload aggregation header. Per-packet metadata can also be in other media transport headers (e.g., MoQ or RoQ header, etc.).

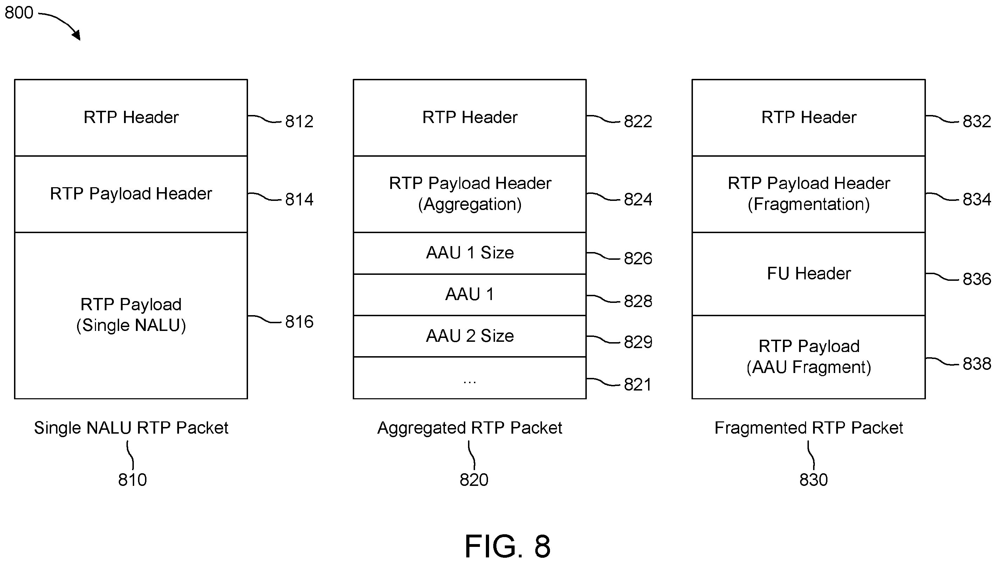

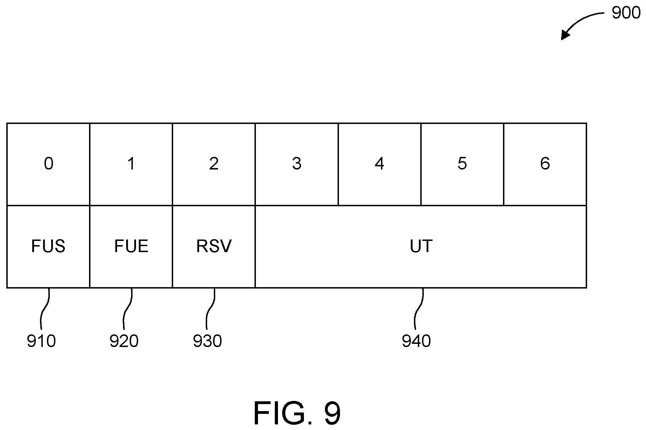

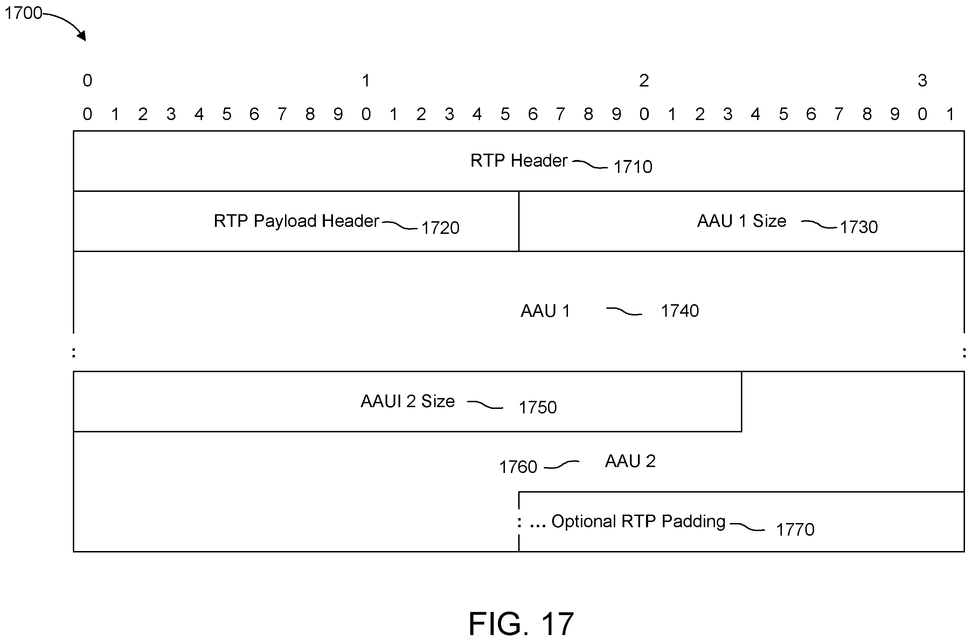

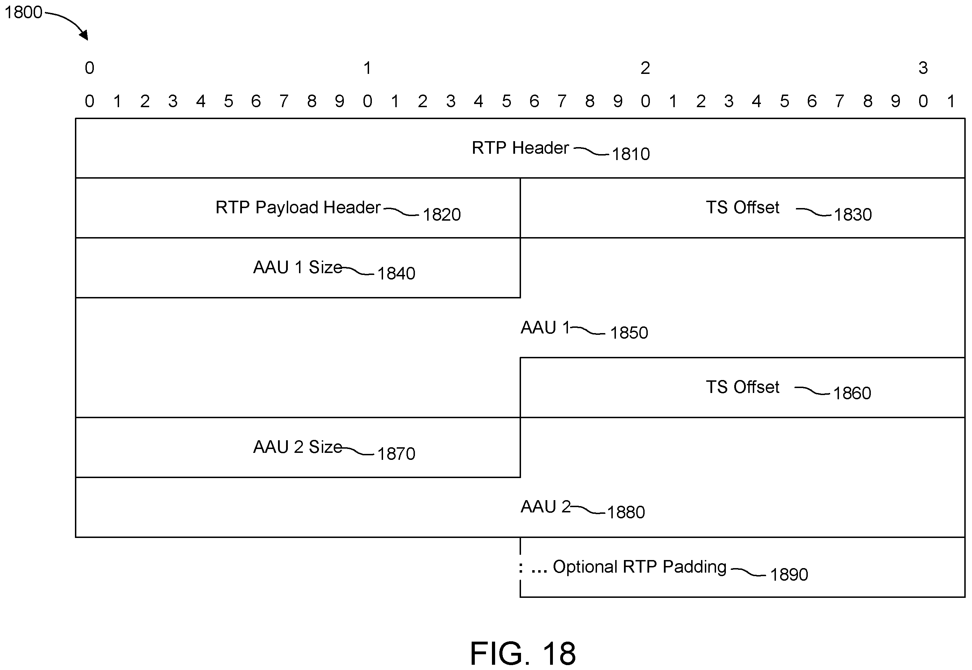

FIG. 8 illustrates examples 800 of transmission modes in RTP. According to the transmission type, avatar animation packets can be transmitted in one of three modes: single mode provided in FIG. 17, aggregation mode provided in FIG. 18, or fragmentation mode provided in FIG. 9. SDP or application layer may be used to exchange session information between endpoints before starting the avatar animation data transmission.

As illustrated in FIG. 8, avatar animation data can be transmitted with 3 modes. The first mode is the single mode 810 (further described with respect to FIG. 17) where each RTP packet contains only one ATU. In an aggregation mode 820 (further described with respect to FIG. 18), an RTP packet may aggregate more than one ATU when the ATU sizes are small. In the fragmentation mode 830 (further described with respect to FIG. 9), the avatar animation information in the ATU is fragmented across more than one RTP packet when the size of the ATU larger than the MTU of the network.

Single mode 810 includes a single NALU RTP packet that includes an RTP header 812, an RTP payload header 814, and an RTP payload 816 that is a single NALU.

Aggregation mode 820 includes an aggregated RTP packet that includes an RTP header 822, an RTP payload header 824 that is aggregated, an AAU 1 size 826, an AAU 1 828 that is single NALU, an AAU 2 size 829, and ... 821.

Fragmentation mode 830 includes an RTP header 832, an RTP payload header 834 that is fragmented, a FU header 836, and an RTP payload 838 that is AAU fragment.

FIG. 9 illustrates the fragmentation RTP packet structure 900. In structure 900, a fragmented unit start 910 (FUS) provides a single bit identifying the fragmented unit start, and fragmented unit end 920 (FUE) provides a single bit identifying the fragmented unit end. Both FUS 910 and FUE 920 are used to mark the period of fragmentation. Structure 900 includes reserved bit 930 (RSV) and unit type 940 (UT). RSV 930 are reserved bits (for future use) and UT 940 is the unit type for the ATU that is being fragmented across multiple packets.

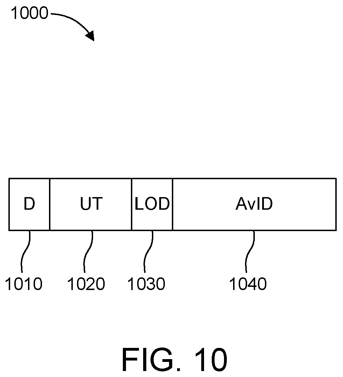

FIG. 10 illustrates examples of the RTP payload header 1000 definition. RTP payload header 1000 is defined to provide information on avatar animation data included in the RTP payload and to efficiently transmit data in network congestion/packet loss situations. An example of an RTP payload header 1000 may include D 1010 indicating a synctype bit, UT 1020 indicating unit type, LOD 1030 indicating level of detail, and AvID 1040 indicating an avatar ID.

IEs, independent of type, may be encoded via various methods. There is no restriction on the encoding methods that may be used. In particular, for IEs containing similar contents, it is possible to use a unified encoding method by utilizing bits in one IE for efficient encoding. As an example, the unit type value may be expressed together with the transmission type value. When the AAU unit type is represented with a specific value, aggregation mode and fragmentation mode may be assigned to the specific value and represented together. An example of unit type value may include 0 = Configuration (single), 1 = Animation (single), 2 = Skeletal (single), 3 = Landmark (single), 4 = Silent (single), 13 = Single-Time Aggregation, 14 = Multi-Time Aggregation and 15 = Fragmentation, for example.

In an example, the RTP packet, depending on the packet transmission method, may include additional headers. Information from the lowest (inner) header may be reflected in the upper header. For example, if the lower data indicates a sync packet, the importance may be emphasized by expressing this information in the upper header as well.

In an example of avatar animation transport indication, information in avatar animation data may be expressed using the RTP payload header. Some information may be signaled in the RTP header itself. If the avatar animation data information is signaled using the RTP header, it may be possible to process the packet without checking the payload of the packet. For example, a new sync packet of the avatar animation data may be signaled using a specific bit in the RTP header. A bit in the RTP payload header may be used to encode the avatar animation transport indication. For example, the RTP header marker bit (M-bit) may be used to encode avatar animation transport indication.

The avatar animation flow may be transported using different methods. Such methods include using encrypted transport methods such as RTP over QUIC or Media over QUIC. In those encrypted transport methods, the avatar animation transport IEs may be transported in header fields that are not encrypted end-to-end, and may be accessible to intermediate nodes, along with other MoQ or RoQ transport metadata (such as object ID, or track information). For example, avatar animation transport IEs may be transported in hop-by-hop MoQ or RoQ headers or messages. To access avatar animation transport IEs encoded in such manner, an intermediate node can be an RoQ or MoQ proxy. MoQ and RoQ proxies can typically access MoQ/RoQ transport metadata.

An example of per-flow avatar animation transport IEs in SDP is provided. To negotiate avatar animation data communications, new attributes may be defined to encode each of the per-flow avatar animation transport IEs defined herein. Below is an example of an avatar animation media description using the well-known SDP format and further extending the format to describe an avatar animation stream and its associated attributes. In this example, 1) m=application 43291 UDP/TLS/RTP/SAVPF 120, 2) c=IN IP4 192.168.2.8, 3) b=AS:64, 4) a=mid:stream0, 5) a=recvonly, 6) a=ssrc:1 cname:stream0, 7) a=rtcp-mux, 8) a=rtpmap:120 ampg/8000, and 9) a=fmtp:120 profile-id=1;version=2023; animation-silence-suppression.

Line 1 (1)m=avatar-animation 43291 UDP/TLS/RTP/SAVPF 120) indicates that the type of media is an avatar animation, and the numbers following it indicate the port used. For example, '120' means the payload type. Lines 2 to 7 (2) c=IN IP4 192.168.2.8, 3) b=AS:64, 4) a=mid:stream0, 5) a=recvonly, 6) a=ssrc:1 cname:stream0, 7) a=rtcp-mux) are well-known SDP lines using exemplary values. The rtpmap in line 8 (8) a=rtpmap ) maps the payload type (120) with a media format (AMPG, designating there a new avatar animation bitstream format defined), and a sampling rate (8000 for 8kHz). Line 9 (9) a=fmtp:120 profile-id=1;version=2023; animation-silence-suppression) provides the value of new attributes specific to the new avatar animation format. Attributes may be defined for any per-flow avatar animation transport IE defined herein. This example uses three exemplary attributes, based on per-flow avatar animation transport IEs version, profile, version, and animation silence suppression.

In some systems, an avatar animation stream may include multiple sub-streams corresponding to different avatars, i.e., corresponding to different avatar container files and different avatar IDs. This feature may be called avatar animation multiplexing herein. For example, in a multi-party conference scenario, a media sender may send in a single stream, the avatar animations corresponding to multiple participants, which helps reduce the number of streams, and helps include new participants dynamically without requiring new SDP signaling. When using avatar animation multiplexing, the media sender may include an avatar ID value in, e.g., the RTP payload header portion of, the RTP packets including the AAUs of the stream, where the avatar ID value corresponds to the avatar ID of the AAU(s) in the RTP packet. For example, the avatar ID value in the RTP payload header may be the index of the avatar ID in the list of avatar IDs signaled in SDP. When receiving the RTP packet, the media receiver may provide, to the decoder, the AAU(s) included in the packet, along with the avatar ID from the RTP payload header, which enables the decoder to efficiently decode each avatar animations independently. For example, the receiver may transmit directly the AAU(s) to different instances of a decoder software component, without requiring parsing the AAU(s) to determine which instance to transmit to. In some systems, the avatar ID may be encoded in another field of the RTP packet.

To signal that avatar animation multiplexing is used, a media sender or receiver may signal multiple avatar IDs in SDP. For example, the SDP parameter ampg-avatar-id may include a, e.g., comma-separated, list of avatar IDs. A media sender can include multiple avatar IDs in SDP to indicate that the related avatar animation stream (e.g., the stream whose m= line most immediately precedes the line containing ampg-avatar-id) includes AAUs associated with any of the avatar IDs, and no other avatar IDs. A media receiver may use the multiple avatar IDs to create multiple decoder instances (e.g., one for each avatar ID) and/or verify it has the needed avatar container files or download any missing avatar container file. In some exemplary cases, when a new person enters a meeting room and is detected by the conference system, the conference system (e.g., as a media sender) may send a new SDP offer message including an additional avatar ID corresponding to the newly detected person, which enables sending avatar animation data in the stream, for this person.

When using avatar animation multiplexing, the media sender or receiver may indicate a single LoD value in SDP, to indicate that avatar animations are using the same LoD, or may indicate several LoD values in SDP, to indicate that different LoDs may be used for different avatar IDs. In some systems, the media sender or receiver may indicate multiple LoDs for each avatar ID, e.g., by including, in the ampg-avatar-id SDP parameter, avatar IDs and related LoDs, for example using the format: ampg-avatar-id: avatarid1:lod1-lod2,avatarid2:lod1,avatarid3:lod2. A media receiver may indicate multiple LoDs per avatar ID, to indicate that it supports or prefers the indicated LoDs for the corresponding avatar IDs. A media sender may indicate multiple LoDs per avatar ID, to indicate that the stream may include, at any given time, AAUs of one of the indicated LoDs, for AAUs of the corresponding avatar ID.

The avatar representation format (ARF) defines two key components of an avatar animation system: the base avatar format and the animation stream format.

The base avatar format may define a standardized structure for avatar models, allowing the models to be stored in digital asset repositories. This ensures that core avatar assets can be reliably accessed and animated by receiving systems. The animation stream format may specify how animation data is organized and transmitted between sender and receiver. The animation stream format may define the encoding of facial and body animation, enabling data captured from input devices such as head-mounted displays (HMDs) and sensors to be consistently interpreted across different systems for animating associated avatars.

Avatar animation streams may be timed data used to animate an avatar. This data includes skeletal, blend shape set, and other animation-related information. Animation stream format may define how animation data is structured and carried between senders and receivers. This format defines how facial and body animation information is encoded, allowing data captured from input devices like head-mounted displays (HMDs) and sensors to be consistently interpreted across different systems for the animation of associated avatars.

Avatar animation data may be stored as samples in an avatar container, such as the MPEG Avatar representation format container, for example, along with the avatar model representation. This data may also be generated on-the-fly as cameras and sensors capture a person's motion and generate corresponding commands to mimic this movement for an avatar that represents the user. Avatar animation samples may be structured into a bitstream comprising a sequence of avatar animation units (AAUs).

Each AAU may include an Avatar ID that indicates the target avatar to which the animation data applies. Each AAU may include parameters, such as a Level of Detail (LoD), which indicates the quality of the avatar animation, and an avatar part ID, which indicates which specific part of the avatar is animated.

Avatar animation content may be transmitted over one or more streams, depending on applications. For example, an application may transmit animations for a single avatar in different streams or may transmit animations for multiple avatars in a single stream. In some cases, an application may choose to stream a single level of detail for all avatar animations, while in some other cases, an application may associate different avatars or avatar parts with different levels of details, depending on the position of the avatar, and may change the level of detail over time. An application may stream different avatar parts in different streams. In all cases, the receiver may be aware of the avatar IDs, levels of detail and/or avatar part IDs that are transmitted in a stream. This awareness may enable the receiver to verify it has the necessary assets to render the avatar animation. The receiver may use the avatar ID or level of detail associated with an AAU to transmit the AAU to an animation player instance that has the proper assets.

The following examples are presented as examples of implementation of the described avatar animation transmission methods for real-time services including exemplary RTP Payload formats for avatar animation and exemplary RTP header formats for avatar animation.

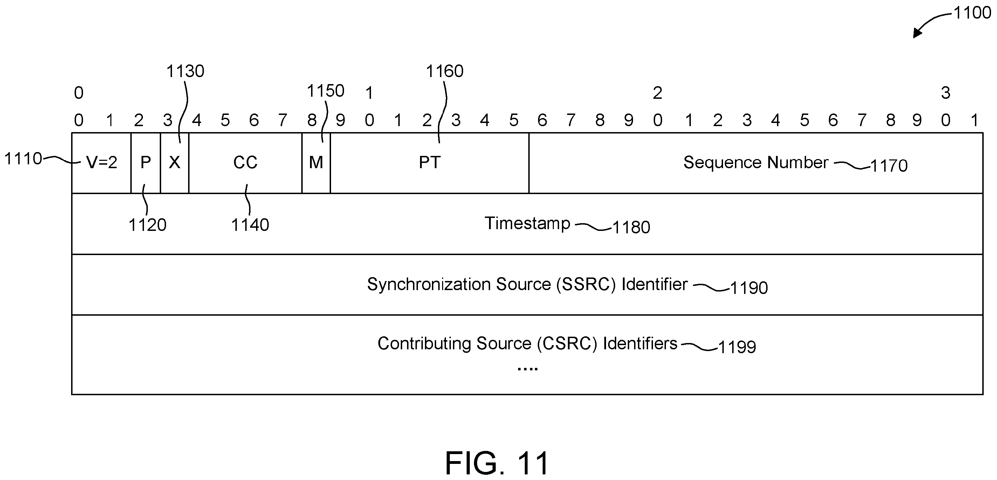

FIG. 11 illustrates an exemplary RTP header for avatar animation 1100. Generally, the definition of the RTP header follows the format defined in RFC 3550 as is represented in FIG. 11. The three header values can be overridden as follows. Header 1100 includes version (V)=2 1110, padding (P) 1120, extension (X) 1130, CSRC count (CC) 140, marker bit (M) 150, payload type (PT) 160, sequence number 170, time stamp (TS) 180, synchronization source (SSRC) identifier 1190, and contributing source (CSRC) identifiers 1199.

V 1110 is a field that identifies the version of RTP. The version defined by RFC3550 is 2. P 1120 may comprise 1 bit. If P 1120 is set, the packet may contain one or more additional padding octets at the end which are not part of the payload. X 1130 may comprise 1 bit. If X 1130 is set, the fixed header may be followed by exactly one header extension, with a defined format. CC 1140 may comprise 4 bits. CC 1140 may contain the number of CSRC identifiers that follow the fixed header. M 1150 may comprise 1 bit. The interpretation of M 1150 may be defined by a profile. PT 1160 may comprise 7 bits. PT 1160 may be a field that identifies the format of the RTP payload and determines its interpretation by the application. A profile may specify a default static mapping of payload type codes to payload formats. Sequence number 1170 may comprise 16 bits. Sequence number 1170 may increment by one for each RTP data packet sent, and may be used by the receiver to detect packet loss and to restore packet sequence. TS 1180 may comprise 32 bits. TS 1180 may reflect the sampling instant of the first octet in the RTP data packet.

Further, PT 1160 may comprise 7 bits and, in addition to the existing types, additional types can be specified to indicate that the payload contains avatar animation data. For example, a type called 'Avatar Animation' can be defined and used with the dynamic payload type field. The assignment of an RTP payload type for this new packet format is not necessary.

TS 1180 may comprise 32 bits and may can be calculated with packet durations. The timestamp may allow finding the exact location of the packet in the presentation timeline.

M 1150 may comprise 1 bit and may be used to mark the first avatar animation packet after an idle period. This marker bit may enable jitter buffer adaptation and/or potentially a reset of the avatar to a neutral position, prior to the beginning of the burst with minimal impact on the quality of experience for the end user.

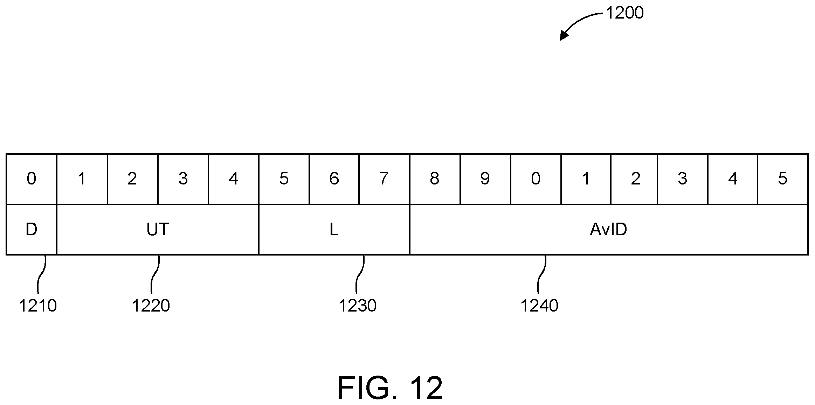

FIG. 12 illustrates an RTP payload header 1200 for avatar animation. Header 1200 represented an exemplary RTP payload header format for avatar animation. Header 1200 includes the structure for the RTP payload header for avatar animation. Header 1200 may include Sync type 1210 (D), Unit type 1220 (UT), L 1230, and AviD 1240. D 1210 may comprise 1 bit. D 1210 may be used to indicate whether an ATU included in the avatar animation packet payload (e.g., RTP payload) is a keyframe AAU or not. Sync information may be important information that also refers to non-sync packets. The sync type can be used to prioritize avatar animation packets. UT 1220 may comprise 4 bits. UT 1220 may indicate the type of the AAU. Based on this UT 1220, different processing methods can be defined based on packet importance. Through UT 1220, it may enable checking the type of AAU and based on UT 1220, the importance of an AAU to enable effective avatar animation packet transmission. L 1230 may comprise 3 bits. L 1230 may be used to signal the layer or level-of-detail (LoD) to which the data in payload are applicable. L 1230 may indicate the layer or level of detail of the avatar to which the ATU applies. L 1230 may be used to distinguish and filter packets carrying ATUs that relate to a particular level of detail. Avatar ID (AvID) 1240 may comprise 8 bits. AvID 1240 may provide the Avatar ID for the avatar to which the ATU(s) in the payload of the packet apply.

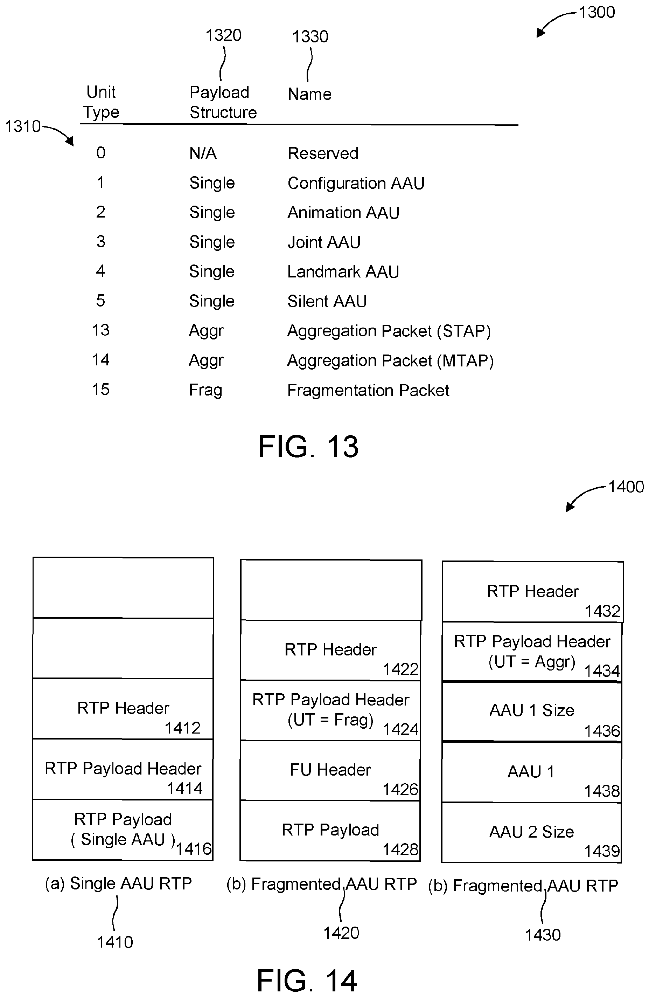

FIG. 13 illustrates a unit type field 1300. Unit type field 1300 includes a unit type 1310, a payload structure 1320 and a name 1330 of the unit type field. Unit type 1310 ranges from 0-5 and 13-15. Payload structure 1320 include N/A, single, aggregate and fragment payloads. Names 1330 include reserved, configuration AAU, animation AAU, joint AAU, landmark AAU, silent AAU, aggregation packet (STAP), aggregation packet (MTAP), and fragmentation packet, for example.

Three different types of RTP packet payload structures are specified. The receiver can identify the payload structure using unit type field 1500. The first structure is for a single AAU, the second structure is for fragments of an AAU, and the third structure is for an aggregate of AAUs in the same packet. The unit type field may represent both the payload structure and, in the single AAU case, also represents the type of the AAU present in the payload.

FIG. 14 illustrates an RTP payload structure 1400 for avatar animation. Payload structure 1400 may be a single AAU packet 1410, a fragmented AAU packet 1420, or an aggregation AAU packet 1430, for example. Single AAU packet 1410 may include an RTP header 1412,an RTP payload header 1414, and an RTP payload 1416 (single AAU). Fragmented AAU packet 1420 may include an RTP header 1422, an RTP payload header 1424 (UT = frag), FU header 1426, and RTP payload 1428. Aggregation AAU packet 1430 may include an RTP header 1432, an RTP payload header 1434 (UT = aggr), AAU1 size 1436, AAU 1 1438, and AAU 2 size 1439, for example.

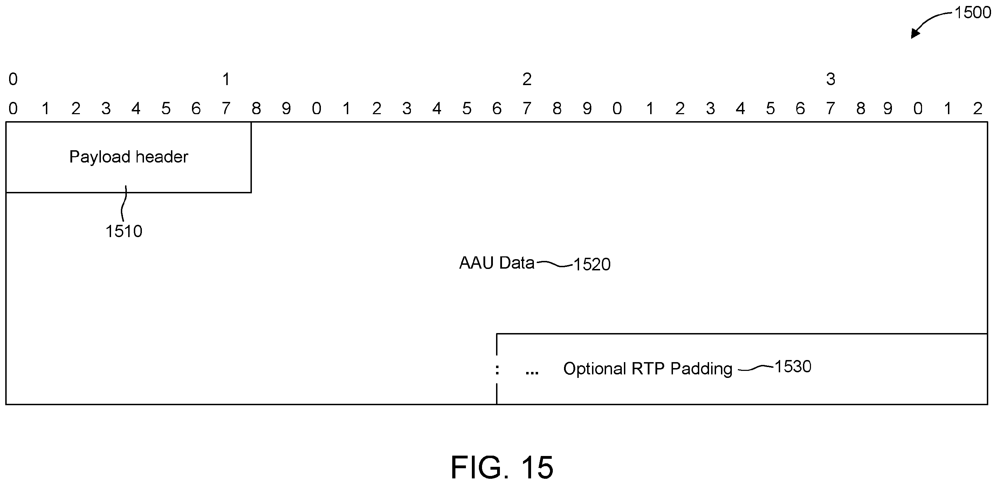

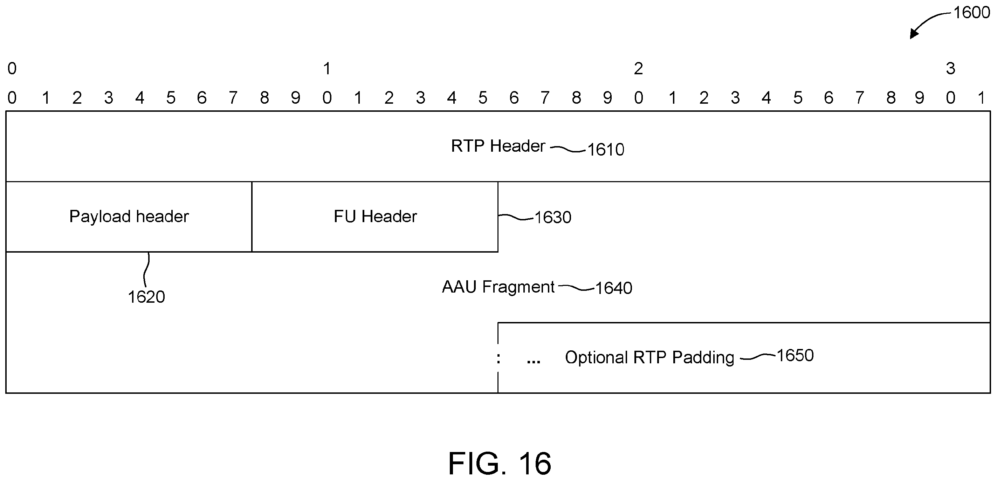

Payload structure 1400 includes the single AAU payload structure is further described with respect to FIG. 15. The fragmented AAU payload structure is further described with respect to FIG. 16.

FIG. 15 illustrates a single AAU structure 1500. Single AAU structure 1500 includes an RTP packet which contains an RTP payload header 1510 followed by a single AAU 1520. RTP payload header 1510 follows the structure described hereinabove. Optional RTP padding 1530 may also be included.

FIG. 16 illustrates a fragmented AAU structure 1600. Fragmented AAU structure 1600 includes the RTP packet which contains an RTP header 1610, a payload header 1620 followed by a fragmented unit (FU) header 1630, followed by an AAU fragment 1640. RTP payload header 1610 follows the structure described hereinabove. The value of the UT field of RTP payload header 1610 is 8. FU header 1630 follows the structure described in FIG. 9. FUs may be utilized to enable fragmenting a single AAU into multiple RTP packets. Fragments of the same AAU may be sent in consecutive order with ascending RTP sequence numbers (with no other RTP packets within the same RTP stream being sent between the first and last fragment). FUs may not be nested; i.e., a FU may not contain a subset of another FU. Optional RTP padding 1650 may also be included.

Referring back to FIG. 9 illustrating a FU header 900, as set forth above, FU header 900 may include fragmented unit start (FUS) 910, fragmented unit end (FUE) 920, reserved bits (RSV) 930, and unit type field (UT) 940. FUS 910 may comprise 1 bit and may be set to 1 for the first fragment, and 0 for the other fragments, for example. FUE 920 may comprise 1 bit and may be set to 1 for the last fragment, and 0 for the other fragments, for example. RSV 930 may comprise 3 bits and may be set to 0 by the sender and ignored by the receiver, for example. UT 940 may comprise 3 bits and may indicate the type of the AAU this fragment belongs to, using values defined for the AAU types in Table 3.

FIG. 17 illustrates the single-time aggregation packet (STAP) structure 1700. Structure 1700 may be used to transmit multiple ATUs that have the same timestamp. Structure 1700 may include an RTP header 1710, an RTP payload header 1720, an AAU 1 size 1730, an AAU 1 1740, an AAU 2 size 1750, an AAU 2 1760, and an optional RTP padding 1770 as shown.

As illustrated in FIG. 9, there is a STAP packet with two ATUs. As would be understood structure 1700 may be extended beyond two ATUs. AAU size 1730, 1750 and AAU 1740, 1760 may be an AAU header and AAU payload, for example as described with respect to animation bitstream and compression such as with landmarks, for example, as would be understood to those possessing an ordinary skill in the art.

RTP header 1710 represents a standard header associated with any RTP packet. RTP payload header 1720 is provided in FIG. 12.

The avatar ID is located inside the RTP payload header. However, from an implementation perspective, the avatar ID may support the following options: including the avatar ID in front of each AAU unit following the payload header, and integrating the avatar ID within the animation-related information inside the payload.

FIG. 18 illustrates the multi-time aggregation packet (MTAP) structure 1800. Structure 1800 may be used to transmit multiple ATUs with different time stamps. For example, various AAUs corresponding to time order may be included in one packet. Structure 1800 may include an RTP header 1810, an RTP payload header 1820, a TS offset 1830, an AAU 1 size 1840, an AAU 1 1850, a TS offset 1860, an AAU 2 size 1870, an AAU 2 1880, and an optional RTP padding 1890 as shown. As described above with respect to FIG. 9 for structure 900, TS offsets 1830 and 1860 are the timestamp offsets for the two ATUs carried in the MTAP packet.

The following considerations apply for the streaming of avatar animation units over RTP: The AAU format uses silent AAUs to signal animation data silence. A sender may decide not to send silent units, to save network resources. Since, from a receiver standpoint, a missed AAU may originate from a not-sent silent unit, or a lost packet, a sender may send one, or a few, avatar silent units at the beginning of a silence. If a media receiver receives a silent AAU, the receiver may assume that silence is intended until the reception of a non-silent AAU. This can reduce the number of false detections of lost RTP packets by the decoder.

In some multimedia conference scenarios using an RTP video mixer (e.g., when adding or selecting a new source), full intra request (FIR) feedback messages may be used with avatar animation. The purpose of the FIR message is to cause an encoder to send a decoder refresh point at the earliest opportunity. In the context of avatar animation, an appropriate decoder refresh point is a configuration AAU. The configuration AAU point enables a decoder to be reset to a known state and be able decode all AAUs following it.

Exemplary payload format parameters and media type registration are illustrated below. The receiver may ignore any parameter unspecified herein.
Type name: application
Subtype name: ampg
Required parameters: N/A

Optional parameters may include ampg-version, ampg-profile, ampg-timescale, ampg-avatar-lods, ampg-avatar-part-id and ampg-silence-suppression.

The ampg-version may provide the year of the edition and amendment of the specifications followed by this RTP payload type.

The ampg-profile may provide the name of the profile used to generate the encoded stream.

The ampg-timescale may provide the number of ticks per second. The ampg-avatar-lods may indicate which levels of detail to use for the avatar.

The ampg-avatar-id (also referred to as ampg-id) may identify the avatars which are the target of the avatar animation stream. This parameter is a comma-separated list of integers

The ampg-avatar-lods (also referred to as ampg-lod) may indicate which levels of detail are used in the avatar animation stream. This parameter is a comma-separated list of integers.

The ampg-avatar-part-id (also referred to as ampg-part-id) may identify which specific parts of the avatar are associated with the avatar animation stream. This parameter is a comma-separated list of integers..

The ampg-silence-suppression (also referred to as ampg-silencesupp) may indicate whether silence suppression should be used (1) or not (0). The default value shall be 0.Indicates whether silence suppression should be used..

General congestion control considerations for RTP transmission apply to avatar streaming over RTP. By adjusting the SDP 'ampg-lod' parameter, it is possible to reduce processing load and optimize bandwidth usage, thereby partially mitigating congestion issues. The ability to adapt the level of detail dynamically may allow senders or receivers to manage computational complexity and network resource consumption based on system constraints or user context. Moreover, in use cases such as video conferencing, different levels of detail may be applied to different parts of the avatar and transmitted via separate streams.

The mapping of the defined payload format media type to the corresponding fields in the Session Description Protocol (SDP) is done according to [RFC8866]. The media name in the "m=" line of SDP may be application. The encoding name in the "a=rtpmap" line of SDP may be ampg. The clock rate in the "a=rtpmap" line may be any sampling rate, typically 8000, for example. The optional parameters, when present, may be included in the "a=fmtp" line of SDP. This is expressed as a media type string, in the form of a semicolon-separated list of parameter=value pairs.

An example of media representation corresponding to the avatar animation RTP payload in SDP is illustrated below.
m=application 43291 UDP/TLS/RTP/SAVPF 120
a=rtpmap:120 ampg/8000
a=fmtp:120 ampg-profile-id=1;ampg-version=2023

When using the offer/answer procedure to negotiate the use of avatar animations, the following considerations apply. When used for a unidirectional stream, the SDP parameters represent the properties of the sender (on the sending side) and of the receiver (on the receiving side).

When used for a sendrecv stream, the SDP parameters represent the properties of the receiver. The avatar animation signal can be sampled at different rates. The avatar animation standard does not mandate a specific frequency.

The receiver properties expressed using the SDP parameters 'ampg-ver', 'ampg-profile' have a mandatory character, since they represent implementation capabilities. The ampg-ver and ampg-profile parameters may be used symmetrically in SDP offer and answer. That is, their values in the answer may match those in the offer, either explicitly signaled or implicitly inferred. In the same session, ampg-ver and ampg-profile may not be changed in subsequent offers or answers.

The parameter 'ampg-ver' indicates the version of the avatar animation standard specification. If it is not specified, the initial version of the avatar animation specification may be assumed, although the sender and receiver may use a specific value based on an out-of-band agreement. The parameter 'ampg-profile' is used to restrict the number of tools used. If it is not specified, the most general profile "main" may be assumed, although the sender and receiver may use a specific value based on an out-of-band agreement.

Any compliant receiver may accept any stream with a compatible version and profile. A receiver supporting a more general profile will accept a stream corresponding to a same or less general profile (e.g., "main" is more general than other profiles).

The properties expressed using SDP parameters other than 'ampg-ver' and 'ampg-profile' are provided as recommendations for efficient data transmission and are not binding, meaning that a sender is encouraged but not required to conform to the parameters specified by the receiver. These properties may be set to different values in offers and answers. These properties may be updated in subsequent offers or answers.

The parameters 'ampg-id', 'ampg-lod', and 'ampg-part-id' can be sent by a sender to reflect the characteristics of bitstreams and can be set by a receiver to reflect the capabilities and configurations of the local player device, or a preferred set of bitstream properties.

The parameter ampg-id indicates that the AAUs of the stream correspond to the one or more avatar IDs signalled with this parameter. The receiver, to be able to render the animations, needs to have loaded the corresponding animation models.

The parameter ampg-part-id indicates that the AAUs of the stream corresponds to the one or more avatar part IDs signalled with this parameter. The receiver, to be able to render the animations, needs to have loaded parts of the animation models corresponding to the part IDs.

The parameter ampg-lod indicates that the AAUs of the stream correspond to the one or more level of details signaled by this parameter. The receiver, to be able to render the animations, needs to have loaded parts of the avatar models including the assets corresponding to the signaled level of details.

A receiver may ignore any part of a received stream, e.g., that it does not have support for rendering.

The parameter 'ampg-silencesupp' may be used to indicate sender and receiver capabilities or preferences. This parameter indicates whether silence suppression may be used.

When avatar animation over RTP is offered with SDP in a declarative style, the parameters capable of indicating both bitstream properties as well as receiver capabilities are used to indicate only bitstream properties. For example, in this case, the parameters ampg-id, ampg-lod, and ampg-part-id declare the values used by the bitstream, not the capabilities and configurations for receiving bitstreams. A receiver of the SDP is required to support all parameters and values of the parameters provided; otherwise, the receiver may reject or not participate in the session. It falls on the creator of the session to use values that are expected to be supported by the receiving application.

An avatar animation packet comprising a protocol data unit (PDU) that comprises one or more animation transport units (ATUs), wherein the one or more ATUs include a plurality of avatar animation transport information elements (IEs).

A method of providing animation data, the method comprising sending an avatar animation packet, the avatar animation packet including a protocol data unit (PDU) that comprises one or more animation transport units (ATUs), wherein the one or more ATUs include a plurality of avatar animation transport information elements (IEs).

The packet or the method, wherein the plurality of avatar animation transport IEs comprises a synchronization (sync) type IE configured to indicate that the one or more ATUs includes avatar animation data that can be processed independently from other ATUs.

The packet or the method , wherein when a decoder processes the one or more ATUs, the processing includes, based on the sync type IE, independent processing of the one or more ATUs or processing the one or more ATUs in conjunction with previously processed ATUs.

The packet or the method, wherein the plurality of avatar animation transport IEs comprises a unit type IE configured to indicate an ATU type for the one or more ATUs.

The packet or the method, wherein the plurality of avatar animation transport IEs comprises a transmission type IE configured to represent the transmission type of the avatar animation packet.

The packet or the method, wherein the transmission type includes one of single packet mode, aggregation mode, and fragmentation mode.

The packet or the method, wherein the plurality of avatar animation transport IEs comprises an animation sequence number IE configured to provide a time duration for the one or more ATUs.

The packet or the method, wherein the animation sequence number IE indicates that the one or more ATUs are provided for an animation at a same time.

The packet or the method, wherein the animation sequence number IE indicates that the one or more ATUs are provided for an animation at a different time.

The packet or the method, wherein the plurality of avatar animation transport IEs comprises one or more avatar animation transport indications.

The packet or the method, wherein the one or more avatar animation transport indications include one or more of an end of animation silence indication, a last fragment indication, a last dependent media packet indication, a synchronization indication, and a configuration indication.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for a receiver to utilize an avatar identification (ID), the method comprising:
receiving a first message indicating one or more avatar animation streams, the first message including an indication of one or more avatar IDs;
determining that the receiver has a plurality of avatar container files corresponding to at least one of the indicated one or more avatar IDs;
determining at least one avatar ID corresponding to the determined avatar container files to receive avatar animation streams for;
sending a second message indicating the determined at least one avatar IDs for the determined avatar animation streams; and
receiving information including a plurality of avatar animation units (AAUs) corresponding to the determined at least one avatar IDs.

2. The method of claim 1, wherein at least one of the first message or the second message is a session description protocol (SDP) message.

3. The method of claim 1, further comprising providing the AAUs to a decoder based on the corresponding avatar ID.

4. The method of claim 1, wherein the received information comprises one or more real time protocol (RTP) packets.

5. The method of claim 1, further comprising providing animation associated with the received plurality of AAUs.

6. The method of claim 1, wherein the avatar IDs are avatar part IDs.

7. A method for a media sender to provide an avatar identification (ID), the method comprising:
determining to multiplex avatar IDs in an avatar animation stream;
sending, to a media receiver, a first message indicating one or more avatar animation streams, including an indication of one or more avatar IDs;
receiving, from the media receiver, a second message indicating a selection of the one or more avatar animation streams, including an indication of one or more selected avatar IDs; and
sending, to the media receiver, information including a plurality of avatar animation units (AAUs) corresponding to at least one of the one or more selected avatar IDs.

8. The method of claim 7, wherein the determination to multiplex is based on at least one of application configuration and participants or avatars involved.

9. The method of claim 7, wherein the determination is based on being in a group meeting.

10. The method of claim 9, wherein the information is real time protocol (RTP) packets.

11. A system comprising:
a processor; and
a transceiver communicatively coupled to the processor, the processor and transceiver configured to:
receive a first message indicating one or more avatar animation streams, the first message including an indication of one or more avatar identifications (IDs);
determine that the receiver has a plurality of avatar container files corresponding to at least one of the indicated one or more avatar IDs;
determine at least one avatar ID corresponding to the determined avatar container files to receive avatar animation streams for;
send a second message indicating the determined at least one avatar IDs for the determined avatar animation streams; and
receive information including a plurality of avatar animation units (AAUs) corresponding to the determined at least one avatar IDs.

12. The system of claim 11, wherein the first message or second message is a session description protocol (SDP) message.

13. The system of claim 11, wherein the received information comprises one or more real time protocol (RTP) packets.

14. The system of claim 11, wherein the processor and transceiver are further configured to provide animation associated with the received plurality of AAUs.

15. The system of claim 11, wherein the avatar IDs are avatar part IDs.
